# EUROPÄISCHE PATENTSCHRIFT

(11) **EP 1 037 773 B1**
(45) Veröffentlichungstag und Bekanntmachung des Hinweises auf die Patenterteilung: **12.09.2001**
(21) Anmeldenummer: 98965062.7
(22) Anmeldetag: 10.11.1998
(51) Int. Cl.: B60R 22/02, B60R 22/04, B60R 22/18, B60N 2/42, B64D 25/06

(54) **RÜCKHALTESYSTEM BEI FAHRZEUG, ZUG UND FLUGZEUG ZUR ERHÖHUNG DES INSASSENSCHUTZES**
RESTRAINT SYSTEM IN VEHICLES, TRAINS AND AIRCRAFT FOR INCREASING PASSENGER SAFETY
SYSTEME DE RETENUE SERVANT A AUGMENTER LA SECURITE DES PASSAGERS D'UN VEHICULE AUTOMOBILE, D'UN TRAIN OU D'UN AVION

(30) Priorität: 11.11.1997 DE 19749780
(43) Veröffentlichungstag der Anmeldung: 27.09.2000
(73) Patentinhaber: Go, Giok Djien, Dr.-Ing., 65510 Idstein (DE)
(72) Erfinder: Go, Giok Djien, Dr.-Ing., 65510 Idstein (DE)
(86) Internationale Anmeldenummer: DE9803270
(87) Internationale Veröffentlichungsnummer: WO9924294

(56) Entgegenhaltungen:
- DE-A- 2 345 847
- DE-A- 2 813 888
- DE-A- 3 149 342
- DE-A- 4 010 452
- DE-A- 19 629 878
- FR-A- 2 342 872
- US-A- 3 977 696
- US-A- 5 123 673
- US-A- 5 411 319

## Beschreibung

Die Erfindung betrifft ein Rückhaltesystem bei Transportmittel zur Erhöhung des Insassenschutzes, insbesondere in Kraftfahrzeugen (PKW, Rennautos, Schulbussen, Bussen, LKW), in Zügen (Eisenbahnen), Schiffen (Rennbooten, Schnellbooten) und Flugzeugen.

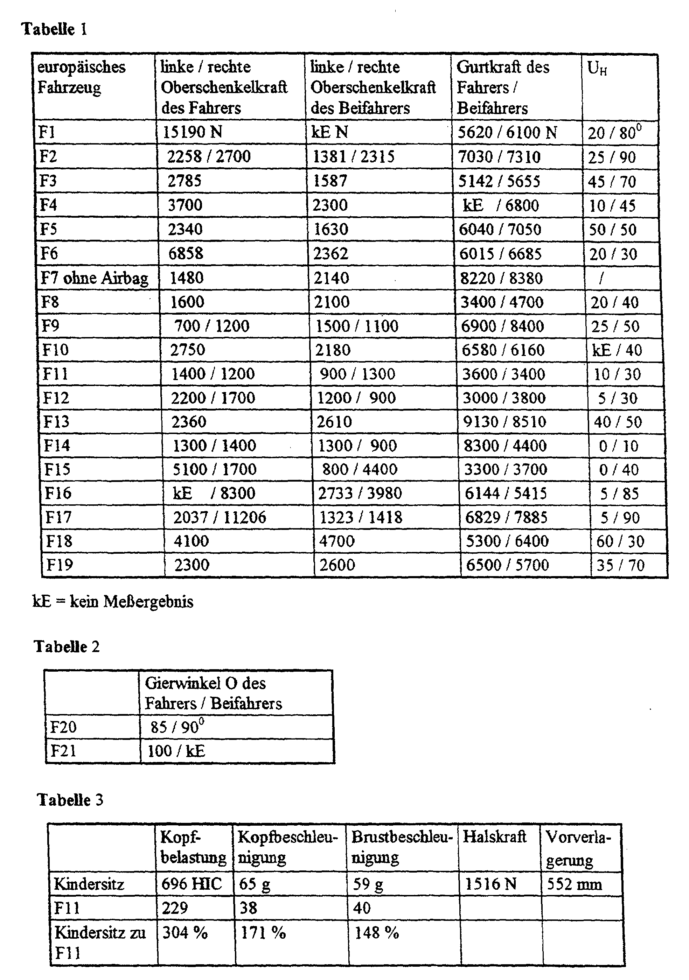

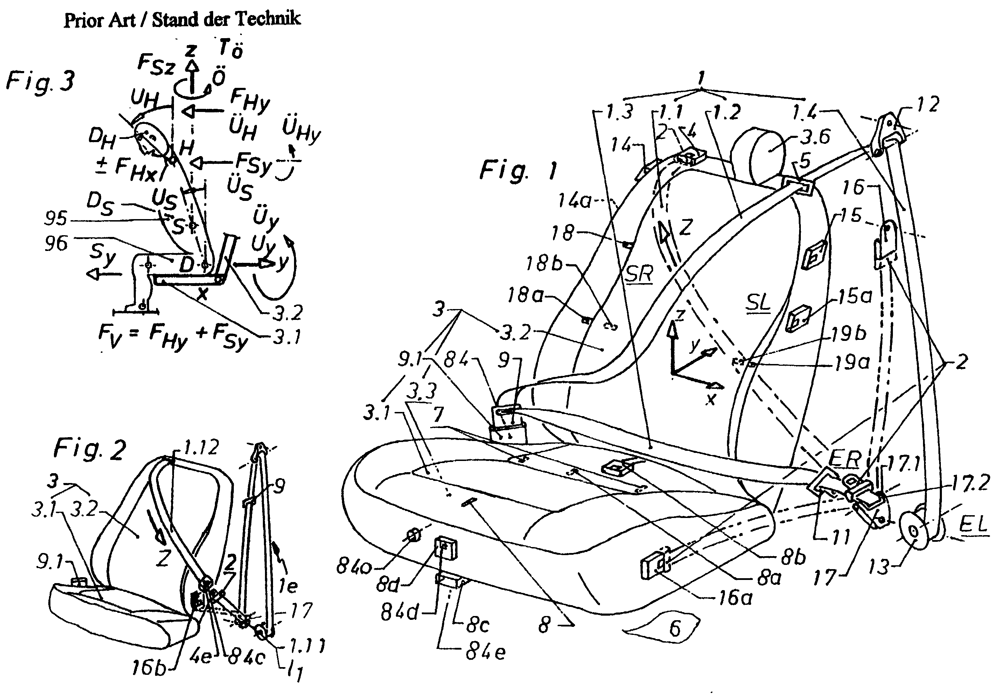

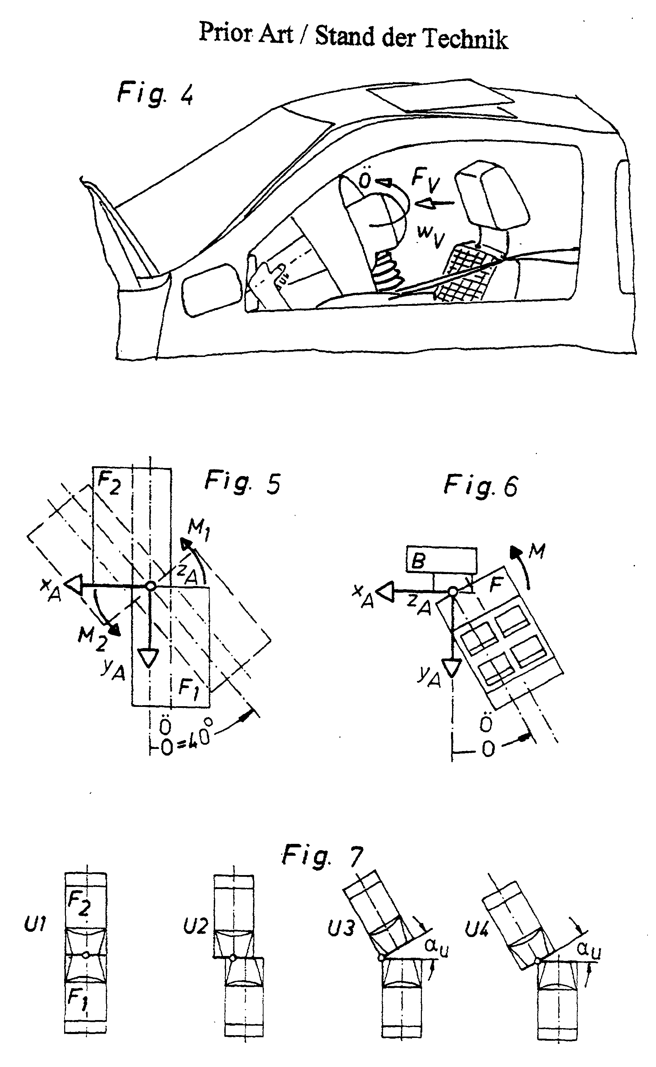

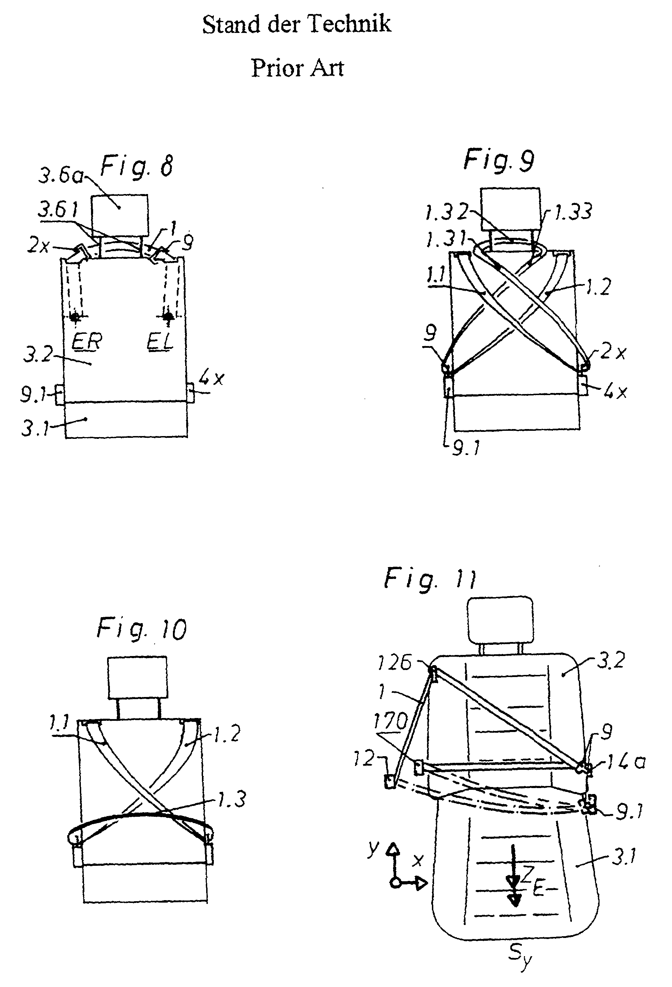

In Kraftfahrzeugen sind unterschiedliche Gurtsysteme bekannt, wobei in Personenkraftwagen vorwiegend in unterschiedlichsten Ausführungen Dreipunkt-Sicherheitsgurte für die einzelnen Sitze verwendet werden, wie es DE 37 41 831 A1 in **Fig.** 11 zeigt. Ein Nachteil des Dreipunkt-Sicherheitsgurtes besteht darin, daß er den unsymmetrisch angeschnallten Insassen bei einem beliebigen Aufprall auf das Fahrzeug in jede Richtung (**Fig.** 3 und 4) unzureichend sichert. Da eine der beiden Schultern nicht zurückgehalten ist, ist es öfter vorgekommen, daß der Insasse durch das Aufprallen
- des Kopfes gegen das Lenkrad und/oder die Fensterscheibe oder
- des Airbags gegen den Kopf, der infolge der Nickbeschleunigung Ü_{H}, Gierbeschleunigung Ö, Längs- und/oder Querbeschleunigung außerhalb des Bereiches des Airbags "oop" (out of position) liegt,
   schwer/tödlich verletzt wird.

Weiterhin ist bei diesem Gurtsystem das sogenannte "Submarining" zu beobachten. Hierbei taucht der angeschnallte Insasse unter dem Gurt hindurch, womit seine Schutzwirkung verlorengeht.

Bekannt sind Zweipunkt-Sicherheitsgurte, die man häufig in der Form eines Beckengurtes für den Mittelsitz einer Rückbank im Kraftfahrzeug antrifft, welche in nahezu gleicher Anordnung für die Passagiere im Flugzeug zur Verfügung stehen. Dieser Beckengurt bietet jedoch gegenüber dem Dreipunkt-Sicherheitsgurt einen entscheidend geringeren Schutz bei Unfällen. Wegen der enorm großen Beschleunigungen bei auftretenden Turbulenzen während eines Fluges ist die Schutzwirkung äußerst gering.

Einen deutlich verbesserten Schutz bieten Gurtsysteme, wie sie der DE 26 02 875 A1 (**Fig**. 8-10) zu entnehmen sind, wo der Verlauf des Sicherheitsgurtes "X-förmig" vor dem Oberkörper des Insassen durch Kreuzung beider Brustgurtabschnitte erfolgt und gleichzeitig ein Beckengurtabschnitt den Unterkörper sichert. Gebildet wird diese Konfiguration dadurch, daß ein Sicherheitsgurt an seinen Enden jeweils mit einem Gurtaufroller hinter dem anzuschnallenden Insassen verbunden ist und mittels zweier Greifringe am Gurtband über Kopf, Schulter und Kopfstütze in die einfach oder zweifach "X-förmige" Anordnung gezogen wird, wobei die Greifringe seitlich am Sitz in Haken eingehängt werden. Diese Ausführung ist jedoch wegen ihrer umständlichen Handhabung von hinten über den Kopf und die Schultern des Insassen nachteilig.

Bekannt ist die "X-förmige" Anordnung der einander überkreuzend verlaufenden Gurte vor dem Oberkörper gemäß US 3,977,696, US 5,123,673, US 5,411,319, DE-A 23 45 847, DE-A 28 13 888 und DE 196 29 878 A. Hierfür werden ein Sicherheitsgurt, Zusatzgurt und zwei Gurtaufroller, die für das Einwickeln jener Gurte verantwortlich sind, verwendet. Leider ist diese Ausführung mit folgenden Nachteilen behaftet:
I. Da beim Unfall die zwei Gurtaufroller unabhängig voneinander arbeiten, werden die zwei Gurte innerhalb von Millisekunden unterschiedlich lang eingewickelt.
II. Unter Belastung gleich großer Gurtkraft bei Frontkollision vergrößert sich die Verformung der Rückenlehne wegen der Befestigung des Endes des Sicherheitsgurtes und Zusatzgurtes, mit der Folge der Zunahme der Vorverlagerung des Insassen. Da alle vier Gurtenden beider Gurte belegt sind, kann kein Energieabsorber angeschlossen werden.

Die gattungsbildende DE-A-2813888 beschreibt einen einzigen Sicherheitsgurt 1 (**Fig**. 1), dessen beide Enden EL und ER in der Rückenlehne mit zwei Gurtaufrollern (nicht gezeichnet) versehen sind und dessen Gurtumlenker **17** an dem Sitzrahmen befestigt ist. Diese Ausführung ist mit dem Nachteil I und folgenden Nachteilen behaftet:
- Beim Entriegeln durch Drücken der Lösetaste **84** bleibt der Gurtabschnitt **1.1** am Hals des Beifahrers hängen. Zum Verriegeln und zur X-förmigen Anordnung beider Gurtabschnitte muß er sich zuerst ducken.
- Da beide Gurtenden belegt sind, gibt es keine Möglichkeit für das Anbringen eines
   Energieabsorbers und körperliche Anpassung an die Höhe des Oberkörpers **95.**

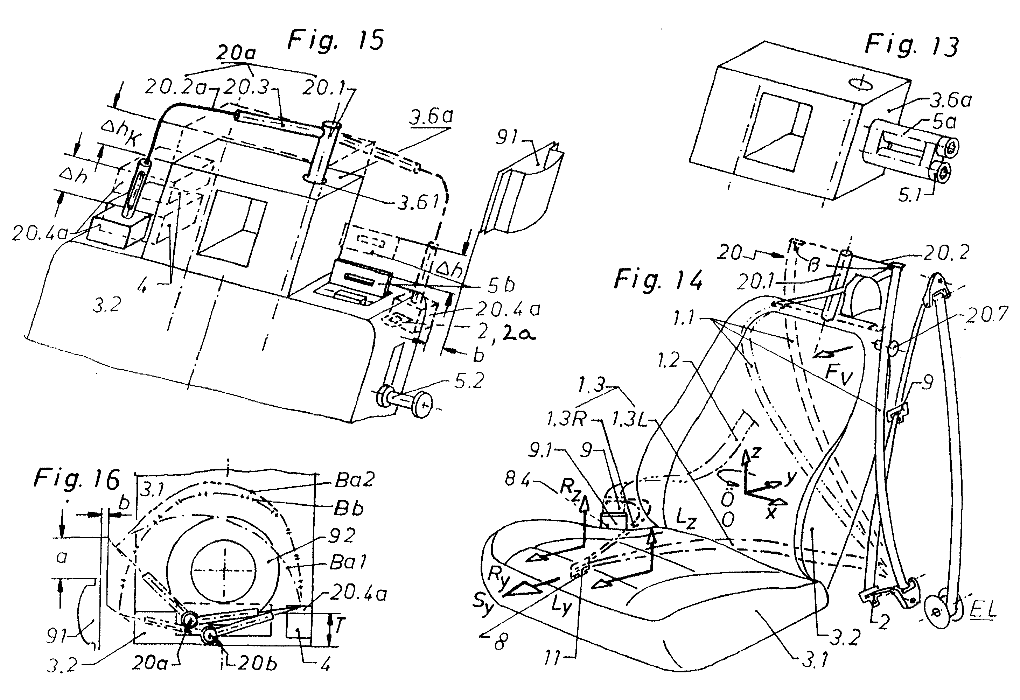

Gemäß Anspruch 2 der DE-A-2813888 besteht ein einteiliger Gurt aus einem Beckengurtabschnitt und zwei Brustgurtabschnitten, deren Enden mit zwei Gurtaufrollern in der Rückenlehne angeordnet sind. Einen der Brustgurtabschnitte muß der Insasse vor dem Sitzen beiseite tun, nach dem Sitzen hochheben, über den Kopf schwenken und am Oberkörper anlegen. Beim Aussteigen nach Drücken der Lösetaste muß er ihn hochheben, um den Kopf samt Oberkörper daraus freizubekommen. Lösbar ist es durch eine benutzerfreundliche Gurtzuführeinrichtung, die diese Arbeit ausführt (**Fig.** 15, 16, 17a bis 17f), oder durch Einstecken der 2. Schloßzunge eines Dreipunktsicherheitsgurtes ins Gurtschloß eines anderen Brustgurtes **(Fig.** 2).

Grundsätzlich ist ein Kindersitz durch vier Hilfsgurte an dem Sitz befestigt. Trotz der X-förmigen Anordnung eines einteiligen Sicherheitsgurtes vor einem Kind im Kindersitz gemäß FR 2 342 872 A1 bleibt das Problem des Einwickelns aller vier Hilfsgurte, Submarinings und der Energieabsorption bei Unfall ungelöst.

In Zügen, Schulbussen und Bussen sind für Passagiere und Begleitpersonal zur Zeit keine Anschnallmittel vorgesehen.

Der Erfindung liegt mithin die Aufgabe zugrunde, die Rückhalterung des Insassen durch einen in-oder zweiteiligen Sicherheitsgurt unter Einhaltung der Benutzerfreundlichkeit zu optimieren. Die Lösung dieser Aufgabe erfolgt erfindungsgemäß durch die Merkmale des Anspruches 1. Die Unteransprüche beschreiben vorteilhafte Ausbildungen der Erfindung.

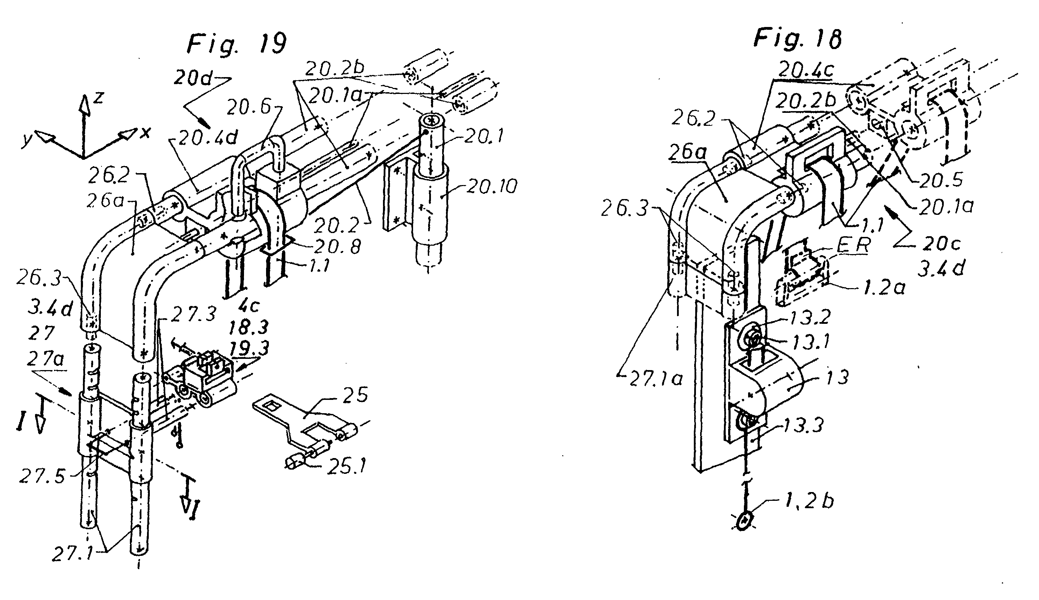

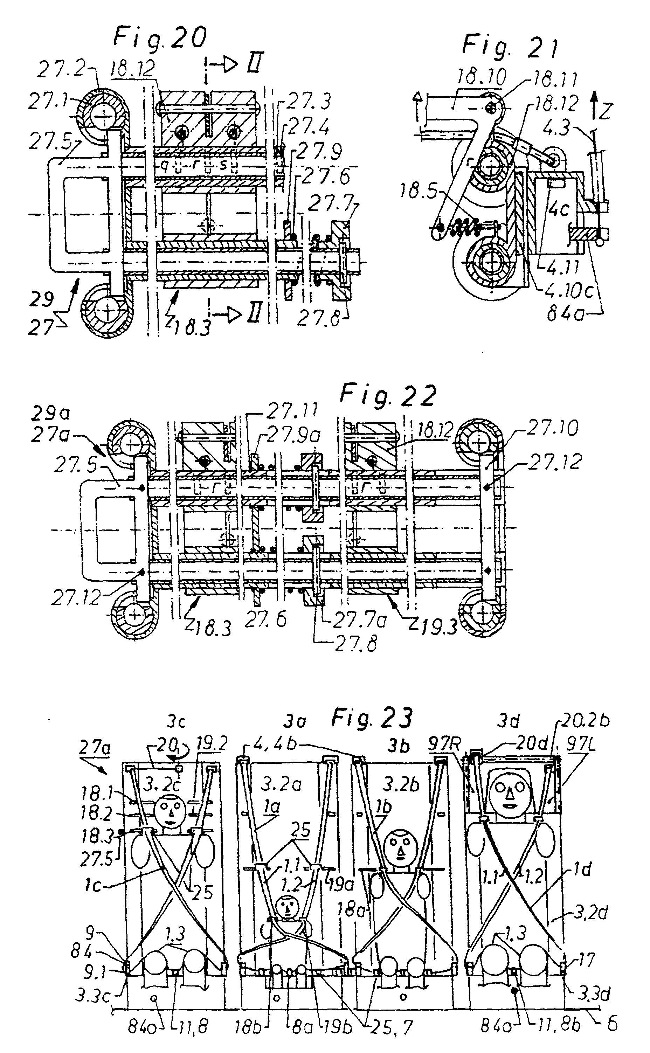

Das erfindungsgemäße Rückhaltesystem weist folgende Vorteile auf:
- Die aus Gierbeschleunigung, Quer-, Längs-, Nickbeschleunigungen und/oder Beschleunigung in z-Achse resultierenden Belastungen (**Fig.** 3) werden an mehreren Verankerungspunkten bei beliebigem realem Aufprall (Front-, Seiten-, Heckaufprall und/oder Überschlagen oder Massenkarambolage, Zug-, Flugzeugunfall oder turbulenzbedingtem Schütteln eines Flugzeuges) gleichmäßig verteilt.
- Die Schutzwirkung wird durch Rückhalterung beider Schultern bei Vorverlagerung (**Fig.** 4) und/oder Gierbeschleunigung sowie durch Rückhalterung beider Oberschenkel bei Submarining sichergestellt.
- Dank der Gurtzuführeinrichtung wird die Gewohnheit bei Benutzung des Dreipunktsicherheitsgurtes durch Einstecken einer einzigen Schloßzunge ins Gurtschloß beibehalten.
- Da ein Gurtende mit dem Gurtaufroller samt Klemmvorrichtung verbunden ist, kann das andere, nicht belegte Gurtende (**Fig.** 12a, 12b, 18) mit Energieabsorbersätzen gemäß WO 99/24292 (PCT/DE98/03271, DE 197 58 498 C2) oder DE 197 58 497 C2 versehen sein. Dadurch läßt sich große Aufprallenergie unterhalb der verletzungsbedingten Schwellwerte abbauen.
- Dank unterschiedlicher Positionierung der Gurtschlösser in Steckverbindung mit den zugehörigen Schloßzungen können Insassen mit unterschiedlicher Körpergröße die Anpassung zum Angurten selbst vornehmen. Außerdem lassen sich die mit derartigen Sicherheitsgurten ausgerüsteten Sitze für Erwachsene auch für die Benutzung von Kindern umwandeln, oder umgekehrt. Dies erhöht die Rate der Sitzbelegung bei Bus, Zug oder Flugzeug, wie es **Fig.** 23 zeigt.
- In einer anderen Ausführungsform ist die Schloßzunge **5b** (**Fig.** 15) im Gurtschloß oder das Gurtschloß höhenverstellbar. An dieses Gurtschloß können Energieabsorber gemäß DE 197 58 497 C2 angeschlossen sein. Damit kann diese höhenverstellbare Schloßzunge die Funktion eines Gurtumlenkers an der oberen Rückenlehne übernehmen. Der höhenverstellbare Umlenkbeschlag 12 an der B-, C-Säule **(Fig.** 1) oder an der Oberkante der Rückenlehne wird nicht mehr benötigt.
- In einer weiteren Ausführungsform kann der Gurtumlenker **5a** (**Fig.** 13) an der höhenverstellbaren Kopfstütze **3.6a** befestigt sein. Eine Höhenverstellung der Kopfstütze **3.6a** zur Anpassung an die Körpergröße des Insassen hat eine unmittelbare Anpassung der Höhe des Gurtumlenkers an seine Schultern zur Folge. Dieses Merkmal unterscheidet sich von dem gemäß DE 40 10 452 A1, dessen Gurtumlenker **5a** bei Berührung mit dem Schaltergurt während der Vorverlagerung des Insassen die Kopfstütze **3.6a** in die Höhe verschiebt, um den nach hinten geschleuderten Kopf abzufangen.
- Die in Ruhestellung griffgünstige Schloßzunge **2, 2a** in Steckverbindung mit einem an dem Sitzkissen **3.1,** der B-, C-Säule oder Rückenlehne befindlichen Gurtschloß **16**, **16a, 16b** (**Fig.** 1, 2) erleichtert dem Insassen das Angurten.
- Der Sicherheitsgurt ist mit einer manuell oder motorisch betreibbaren Gurtzuführeinrichtung ausrüstbar, welche die Bedienungsfreundlichkeit unterstützt. Die Betätigung erfolgt mittels eines Sensors im Sitz oder bekannten Schalters z.B. eines Licht-, Tür-, Tippschalters, wobei bei Überschreitung eines vorgegebenen Zeitrahmens das Anbieten rückgängig gemacht wird.
- Zwecks Bedienungskomfort und schneller Rettung des Insassen wird die Verbindung aller Schloßzungen mit den Gurtschlössern durch Drücken einer einzigen Generallösetaste **84** des Gurtschlosses **9.1** aufgelöst.
- Die runden Überrollrohre **20.2b** des Rückenlehnenrahmens zur Führung des Gurtgehäuses **20.4c, 20.4d (Fig.** 18, 19) übernehmen gleichzeitig die Aufgabe des Überrollbügels, der gleichfalls eine freie Sicht nach hinten zuläßt.
- Aus dem Sicherheitsgurt in einer weiteren Ausführungsform stellt sich ein Multipunkt-Sicherheitsgurt **(Fig.** 1, 14, 23) heraus, welcher mit mehr als drei Verankerungspunkten an einem Sitz befestigbar ist, Hierbei können die Oberschenkel derart festgelegt werden, daß ein Schutz gegen Submarining beim Front- oder Heckaufprall und beim Überschlagen sowie bei der Schlafstellung besteht. Im Gegensatz zum Hosengurt ist ein Nachstellen der Gurtlänge für den Multipunkt-Sicherheitsgurt nicht erforderlich, wenn sich der Umfang des gekleideten Insassen durch Kleidungswechsel verändert.

Nachfolgend werden anhand der Zeichnungen mehrere Ausführungsformen der Erfindung näher erläutert. Es zeigen:
- **Fig.** 1: eine perspektivische Ansicht des Sitzes mit Gurtschlössern an der Rückenlehne und dem Sitzkissen sowie einer 1. Ausführungsform eines Rückhaltesystems aus Multipunkt-Sicherheitsgurt **1** mit Schloßzunge **11** am Beckengurtabschnitt und Schloßzunge **2** des anderen Gurtendes in Pfeilrichtung "Z" zur Steckverbindung mit Gurtschloß **4** und zur X-förmigen Anordnung durch Kreuzung beider Brustgurtabschnitte **1.1, 1.2.**
- **Fig.** 2: eine perspektivische Ansicht des Sitzes und einer 2. Ausführungsform eines Rückhaltesystems aus Dreipunkt-Sicherheitsgurt **1e** mit Schloßzunge **2** vor Einstecken ins Gurtschloß **4e** mit Brustgurt **1.12** in Pfeilrichtung "Z".
- **Fig.** 3: Belastungsvektoren au einen Insassen bei einem beliebigen Aufprall in z-y
- **Fig.** 4: eine perspektivische Ansicht des angegurteten, sehr weit vorveriagerten Dummies bei 50% Offset Crashtest.
- **Fig.** 5: Gierbeschleunigung Ö und Gierwinkel O jedes Fahrzeuges um die Hochachse "Z_{A}" beim 50% Offset Crashtest zweier identischer Fahrzeuge.
- **Fig.** 6: einen Gierwinkel O eines Fahrzeuges um die Hochachse "Z_{A}" beim 50% Offset Crashtest gegen eine steife Barriere.
- **Fig.** 7: vier unterschiedliche Kollisionstypen U1 - U4 aus der Auswertung aller Frontkollisionen durch VDS (Verein der Schadenverscherer).
- **Fig.** 8: eine Vordersicht eines bekannten Rückhaltesystems mit zwei Gurtaufrollem gemäß DE-A-26 02 875 in Grundstellung.
- **Fig.** 9: eine Vordersicht eines zweifach X-förmigen Sicherheitsgurtes nach Fig. 8.
- **Fig.** 10: eine Vordersicht eines einfach X-förmigen Sicherheitsgurtes mit Beckengurtabschnitt nach Fig. 8.
- **Fig.** 11: eine Draufsicht eines bekannten Sicherheitsgurtes gemäß DE 37 41 831 A1.
- **Fig.** 12a: eine schematische, perspektivische Ansicht einer 1. Ausführungsform eines mittels eines Auslösekabels **4.2** beweglichen Gurtschlosses **4a.**
- **Fig**. 12b: eine schematische, perspektivische Ansicht einer 2. Ausführungsform eines mittels eines Elektromotors **4.2**b beweglichen Gurtschlosses **4b.**
- **Fig**. 13: eine perspektivische Ansicht des Gurtumlenkers an der Kopfstütze.
- **Fig.** 14: eine perspektivische Ansicht der Schloßzunge **11** des Beckengurtes **1.3** in Steckverbindung mit Gurtschloß **8** zum Schutz gegen Submarining und einer 1. Ausführungsform einer Gurtzuführeinrichtung **20** des Sicherheitsgurtes.
- **Fig.** 15: eine perspektivische Ansicht einer 2. Ausführungsform einer räumlich verstellbaren Gurtzuführeinrichtung **20a** mit Schloßzunge 2, 2a von der Ruhestellung in die Betriebsstellung und des höhenverstellbaren Gurtumlenkers **5b.**
- **Fig.** 16: eine schematische Draufsicht der 2. und 3. Ausführungsform der Gurtzuführeinrichtung **20a** und **20b.**
- **Fig.** 17a bis 17f: schematische, perspektivische Ansicht der Gurtzuführeinrichtung **20** in der Ruhe- und Betriebsstellung.
- **Fig.** 18: eine schematische, perspektivische Ansicht des Sitzes mit Überrolleinrichtung in Verbindung mit einer 4. Ausführungsform einer Gunzuführeinrichtung **20c.**
- **Fig.** 19: eine schematische, perspektivische Ansicht des Sitzes mit Überrolleinrichtung in Verbindung mit einer 5. Ausführungsform einer Gurtzuführeinrichtung **20d** mit Sicherheitsbügel **20.6** und Höhen- und Breitenverstelleinrichtung **27, 27a.**
- **Fig.** 20: eine Schnittzeichnung einer 1. Ausführungsform einer Höhen- und Breitenverstelleinrichtung **27** entlang der Linie I-I nach **Fig.** 19.
- **Fig.** 21: eine Schnittzeichnung der Verstelleinrichtung **27** entlang der Linie II-II nach **Fig.** 20 mit einer Anordnung eines Gurtschlosses **4c.**
- **Fig.** 22: eine Schnittzeichnung einer 2. Ausführungsform einer Höhen- und Breitenverstelleinrichtung **27a** entlang der Linie I-I nach **Fig.** 19.
- **Fig.** 23: eine Vorderansicht aus der Integration der erfindungsgemäßen Rückhaltesysteme **1a bis 1d** in Sitze **3a bis 3d** für Insassen (Passagiere) unterschiedlicher Gewichtsklassen und Körpergrößen.

Das in **Fig.** 1 dargestellte Rückhaltesystem ist versehen, mit einem herkömmlichen Gurtaufroller **13** samt Klemmeinrichtung, welcher in B-, C-, D-Säule oder einer der beiden Seiten SL und SR einer Rückenlehne **3.2** angeordnet ist und mit einem Gurtende EL verbunden ist. Das andere ER ist mit einer Schloßzunge 2 versehen, die von einem bodenseitigen Gurtumlenker **17** gehalten, lose geführt ist und mit einem der in oder an der Rückenlehne **3.2** angeordneten Gurtschlösser **4, 4a bis 4c, 14, 14a, 18, 18a, 18b** verbindbar ist. Zwischen diesen beiden Gurtenden EL und ER ist in allen Ausführungsformen eine weitere Schloßzunge **9** auf dem Sicherheitsgurt **1** verschieblich angeordnet. Durch Steckverbindung der Schloßzunge **2** und **9** mit dem Gurtschloß **4** (in Pfeilrichtung "Z") und **9.1** wird die X-förmige Anordnung der einander überkreuzend verlaufenden Brustgurtabschnitte **1.1, 1.2** mit dem Beckengurtabschnitt **1.3** ausgebildet.

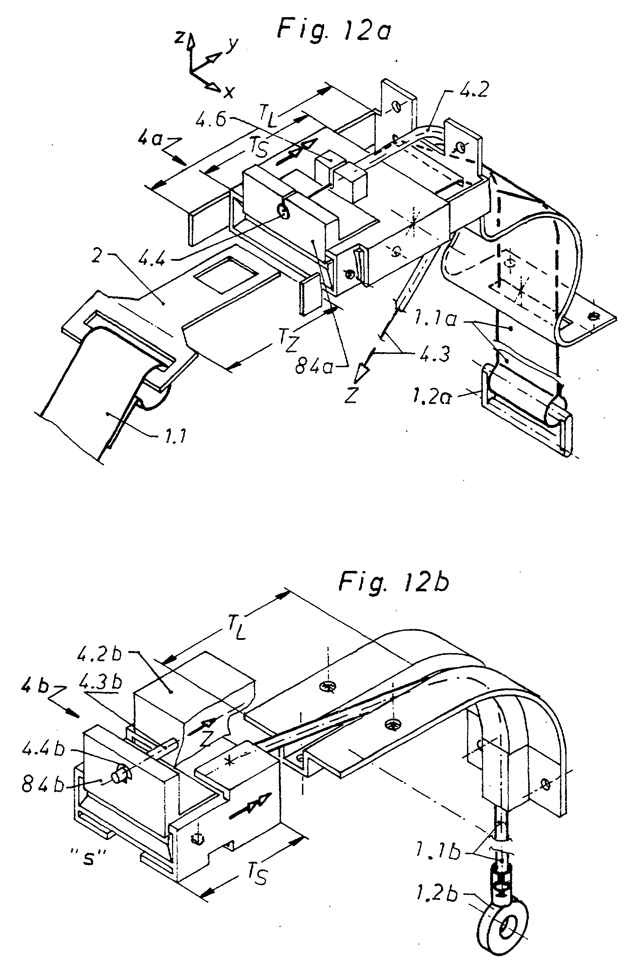

Bei der 2. Ausführungsform gemäß **Fig.** 2 wird eine Erfindung für weitere Verwendung herkömmlicher Dreipunkt-Sicherheitsgurte **1e** durch Umrüsten bis zur Produkteinführung der Multipunkt-Sicherheitsgurte **1** angestrebt. Der nichtgezeichnete Bodenbeschlag wird durch Gurtumlenker **17** ausgetauscht. Das Ende des unteren Brustgurtabschnittes **1.11** ist mit Schloßzunge **2** versehen. Ein Ende eines Brustgurtes **1.12** ist mit einem mit Lösetaste **84c** versehenen Gurtschloß **4e** und das andere Ende mit einem in der Rückenlehne **3.2** angeordneten, nichtgezeichueten 2. Gurtaufroller **13a** ausgestattet. Die Bildung der X-förmigen Rückhalterung erfolgt über das Einstecken der Schloßzunge **2** ins Gurtschloß **4e.** Zur Lösung des Nachteiles I ist die Federkraft des 2. Gurtaufrollers **13a** für Einwickeln des Brustgurtes **1.12** nach Drücken der Lösetaste **84c** entscheidend geringer als die des Gurtaufrollers **13.** Bei verschiedener Sitzpositionen und unterschiedlichem Umfang des angegurteten, gekleideten Insassen ragt der Brustgurtabschnitt **1.11** mit ausreichender Länge "1₁" aus Gurtumlenker **17** heraus, um die Funktion des Gurtaufrollers **13** für Einwickeln, Blockieren des Gurtes sowie Freigabe des auszuziehenden Gurtes bei Fahrt und die Funktion des nichtgezeichneten Gurtstrammers für strammes Ziehen des Gurtes bei Unfall weiterhin aufrechtzuerhalten. Da das Gurtschloß **4e** weder an noch in dem Sitz angeordnet ist, kann die Generallösetaste **84** die Lösetaste **84c** des Gurtschlosses **4e** nicht durch Seil **4.2** oder Elektromotor **4.2b** (**Fig.** 12a und 12b), sondern durch Signale aktivieren.

Das andere Ende des Brustgurtes **1.12** kann mit einem Verbindungsteil **1.2a, 1.2b** (**Fig.** 12a, 12b, 18, 19) oder mit dem Gurtaufroller **13a** (Gurtaufroller **13** gemäß **Fig.** 18) mit Verbindungsteil **1.2b** verbunden sein, um eine Anzahl von Energieabsorbern zwecks Abbau großer Aufprallenergie aufzunehmen.

In einer weiteren Ausführungsform besteht ein Brustgurt **1.12a** aus dem Gurtschloß **4e** und einer der Schloßzunge 2 ähnlichen Schloßzunge **2a** (nicht gezeichnet), die mit
- dem an der Rückenlehue angeordneten Gurtschloß **4, 4a bis 4c, 14, 14a, 18, 18a, 18b, 18.1 bis 18.3** in Betriebsstellung oder
- dem Gurtschloß **16, 16a, 16b** in Ruhestellung
   steckbar verbunden ist. Bei den zugelassenen Kraftfahrzeugen kann eine einfache Modifikation unterschiedlicher Sitze und Dreipunkt-Sicherheitsgurte durch Anbringen mindestens eines Gurtschlosses, des Gurtumlenkers **17,** der 2. Schloßzunge **2** und durch Bereitstellung der einteiligen, abnehmbaren Brustgurte **1.12a** mit unterschiedlicher Länge vorgenommen werden. Ferner läßt sich die Schloßzunge **2a** in dem Gurtschloß durch die Betätigung der Generallösetaste **84** entriegeln.
Aus dem oberen Brustgurt **1.12, 1.12a** und unteren Brustgurtabschnitt **1.11** setzt sich der Brustgurtabschnitt **1.1** zusammen.
Bei aufwendiger Modifikation oder bei neuem Transportmittel läßt sich der Bedienungskomfort durch Einsatz der Gurtzuführeinrichtung **20, 20a** bis **20d** erhöhen, wobei der Brustgurt **1.12, 1.12a** mit Gurtschloß **4e** ein festes Bestandteil der Gurtzuführeinrichtung ist.
Als Übergangslösung wird der Multipunkt-Sicherheitsgurt **1, 1a** bis **1d** durch Brustgurt **1.12, 1.12a** und Dreipunkt-Sicherheitsgurt **1e** in Steckverbindung ersetzt.

In unterschiedlichen Ausführungsformen ist gemäß dem Patentanspruch 1 eine X-förmige Anordnung der einander überkreuzend verlaufenden Brustgurtabschnitte realisierbar, und zwar
c1) durch Steckverbindung mindestens einer Schloßzunge **2** mit dem Gurtschloß der Rückenlehne; *oder*
c2) durch Steckverbindung einer am anderen Ende ER des Brustgurtabschnittes **1.1** angeordneten Schloßzunge **2** einer Gurtzuführeinrichtung **20a, 20b** mit einem Gurtschloß der Rückenlehne in der Betriebsstellung; *oder*
c3) durch Positionierung des Brustgurtabschnittes **1.1,** dessen Ende ER an oder in der Seite SR der Rückenlehne angeordnet ist, von einer Ruhestellung in eine Betriebsstellung bei Verwendung der Gurtzuführeinrichtung **20, 20c, 20d.**

Die Merkmale c2) und c3) weisen den Vorteil auf, daß Insassen die Gewohnheit zum Anschnallen herkömmlicher Dreipunkt-Sicherheitsgurte weiterhin beibehalten können.

Durch Vermehrung der energieabsorbierenden Verankerungspunkte mittels Steckverbindung der Schloßzungen mit den zugehörigen Gurtschlössern **4, 4a bis 4c, 4e, 7, 8, 8a bis 8d, 9.1, 14, 14a, 15, 15a, 18, 18a, 18b, 18.1 bis 18.3, 19, 19a, 19b, 19.1 bis 19.3** (**Fig.** 1, 14, 19, 23), die mit Energieabsorbersätzen gemäß DE 197 58 497 C2 ausgerüstet sind, läßt sich große Energie absorbieren. Damit werden alle technischen Merkmale durch Patentanspruch 1 erfaßt.

Wie **Fig. 1** und **14** zeigen, befindet sich nach einer weiteren Ausgestaltung auf dem Sicherheitsgurt **1** eine dritte Schloßzunge **11,** die mit einem der in oder an dem Sitzkissen **3.3** angeordneten Gurtschlösser **7, 8, 8a** bis **8d** verbindbar ist. Durch Steckverbindung wird der Beckengurtabschnitt **1.3** in die Abschnitte **1.3R, 1.3L** unterteilt. Durch die Rückhalterung beider Oberschenkel wird die Gefahr gegen das sogenannte Submarining beim Front- oder Heckaufprall, beim Überschlagen oder beim turbulenzbedingtem Schütteln eines Flugzeuges vorgebeugt. Darüber hinaus wird bei der aus der DE 37 41 831 A1 **(Fig. 11)** bekannten Schlafstellung dem Insassen ein hinreichender Schutz gegeben.

Da die Rolle (Walze) des herkömmlichen Gurtaufrollers eine Gurtlänge begrenzt aufnehmen kann, ist es nicht auszuschließen, daß die Länge des Sicherheitsgurtes für die Schlafstellung nicht ausreichend ist. Wie in **Fig.** 1 angedeutet, ist das Gurtschloß 8c und **8d** an einem längsverstellbaren Gurt verankert, um die Länge des X-förmigen Sicherheitsgurtes **1** zwischen der Schlaf- und Normalstellung auszugleichen.

Der Gurtumlenker **17** umfaßt ein Gehäuse mit Befestigungsloch, einen Stift **17.1** und, falls erforderlich, eine Hülse **17.2** aus Kunststoff, der wie bei herkömmlichem Umlenkbeschlag **12** mit Riffel oder Noppen versehen sein kann und den Stift umgibt. Der Umlenkbeschlag **12** kann genauso für Gurtumlenker **17** verwendet werden. Aus einem einzigen Stück läßt er sich genauso anfertigen. Vorzugsweise ist Schloßzunge **2** in Ruhestellung von der Aussparung des Gurtumlenkers **17** zu loser Führung des Gurtabschnittes **1.1** lose gehalten. Somit ist die Verwendung auch als Dreipunkt-Sicherheitsgurt möglich.

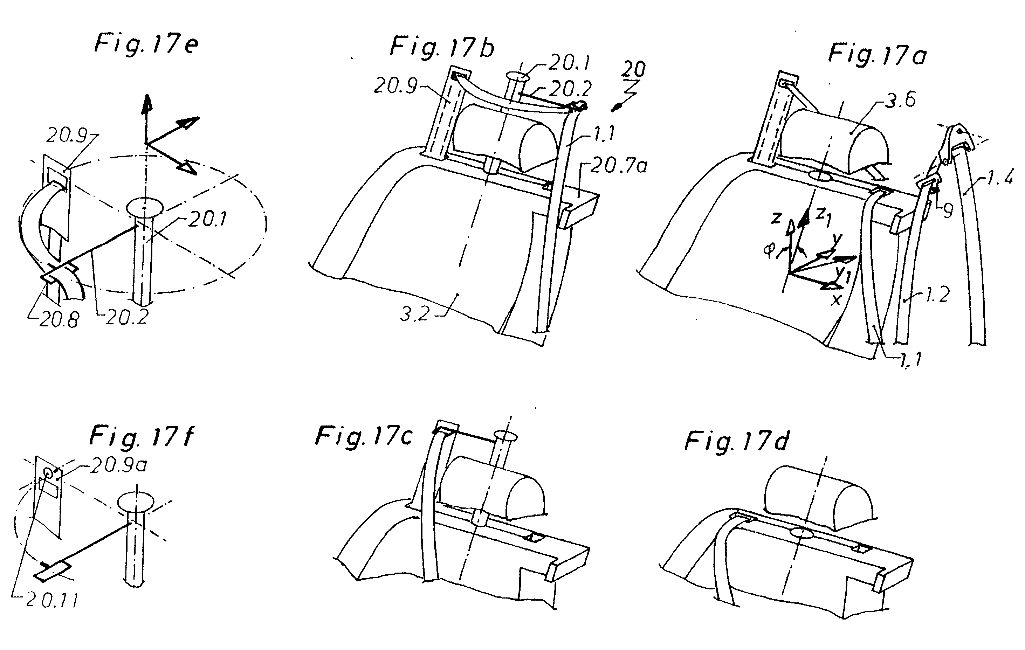

Bei der 1. Ausführungsform gemäß **Fig.** 14, 17a, 17d ist für den Sicherheitsgurt **1**, dessen Ende ER am Rückenlehnenrahmen **3.4** befestigt ist, die Gurtzuführeinrichtung **20** vorgesehen, die sich mit versenktem Gurtzuführblech **20.9** in Ruhestellung befindet, um einen verkaufsfördernden Gesamteindruck zu vermitteln. Infolge z.B. der Belegung des Sitzes durch Insassen wird die Antriebseinrichtung aktiviert, um das Gurtzuführblech **20.9** (**Fig. 17a**) und Führungsrohr **20.1** mit Zuführarm **20.2 (Fig. 17b),** an dessen Ende ein Gurthalter **20.8** zu loser Führung des Gurtabschnittes **1.1** fest angebracht ist, nach oben zu verschieben.

Das Schwenken des Führungsrohres **20.1** mit Zuführarm **20.2** vor dem Oberkörper **95** des Insassen erfolgt um einen Drehwinkel "β" (**Fig.** 14), wonach
- der Stift des Zuführarmes ins Loch des Gurtzuführbleches **20.9** oder ins Halteloch **20.11** des Gurtndükbleches **20.9a (Fig.** 17c, e, f) einrastet sowie
- alle Teile **20.1, 20.2, 20.9** oder **20.9a** in der Rückenlehne **(Fig.** 17d) zur Bildung des X-förmigen Sicherheitsgurtes vor dem Oberkörper versenkt werden.

Durch Auffangen des Gurtabschnittes **1.1** in der Ruhestellung mittels des Gurtfängers **20.7, 20.7a (Fig.** 14, 17a, 17b) ist das Sichverfangen in der Kopfstütze vor allem bei der vorderen Extrempositionierung des Sitzes **3** vermeidbar.

Hat der Sitz **3c** (**Fig.** 23) eine hohe Rückenlehne **3.2c,** so wird ausschließlich der radial verstellbare Zuführarm **20.2** der Gurtzuführeinrichtung **20a** (**Fig.** 15) gegen einen gerade verlaufenden Zuführarm **20.2** der Gurtzuführeinrichtung **20** ausgetauscht.

Bei der 2. und 3. Ausführungsform gemäß **Fig.** 15, 16 unterscheiden sich die Gurtzuführeinrichtungen **20a, 20b** mit höhenverstellbarem Gurtgehäuse **20.4a** und Verstelleinheit 20.3 durch Positionierung der Führungsrohre **20.1** in der Rückenlehne. Jedes Führungsrohr läßt sich durch eine in der Rückenlehne untergebrachte Antriebseinrichtung antreiben. In einem steifen Stützrohr **3.61** der höhenverstellbaren Kopfstütze **3.6a** ist das Führungsrohr **20.1** der Gurtzuführeinrichtung **20a** drehbar gelagert.

Höhenverstellbar um einen Betrag "Δh" ist
- das Gurtgehäuse **20.4a** der Schloßzunge **2, 2a** in Steckverbindung mit irgendeinem Gurtschloß **4, 14, 18** durch Verschieben zweier gegenüberliegender Aussparungen entlang dem Zuführarm **20.2a** und
- der Gurtumlenker **5b** durch Verschieben mittels eines Griffes **5.2** oder mittels Sperrgriffes **27.5** der Verstelleinrichtung **27, 27a (Fig.** 15, 19 bis 22).

Die Gurtzuführeinrichtungen **20a, 20b** sollen folgende Kriterien erfüllen:
- Ein freies Ein- und Aussteigen des Insassen durch Auslegung der Abstände von "a" und "b" zwischen Säule **91** und Zuführarm **20.2a (Fig.** 16) in Ruhestellung;
- Keine Berührung mit der um einen Betrag "Δh_{K}" höhenverstellbaren Kopfstütze **3.6a** und mit dem Kopf eines Insassen mit/ohne Hut **92** durch ausreichende Höhe und Auslenkung.

Aus der Kinematik (Bewegung) des höhenverstellbaren Gurtgehäuses **20.4a** mit Schloßzunge **2, 2a** von der Betriebsstellung in die Ruhestellung ist ersichtlich, daß die Bahnen "Ba2" und "Bb" durch Auslenkung des Zuführarmes **20.2a** mittels radial verstellbarer Verstelleinheit **20.3** außerlialb des Bereiches des Hutes liegen, nicht jedoch die Bahn "Ba1" ohne Verstelleinheit. Dennoch liegt der Kopf ohne Hut innerhalb dieser Bahn "Ba1" frei.

Bei der 4. und 5. Ausführungsform gemäß **Fig.** 18, 19 unterscheiden sich beide Gurtzuführeinrichtungen **20c, 20d** durch rotatorische Bewegung des Zuführarmes **20.2,** dessen Führungsrohr **20.1** im Lagergehäuse **20.10** drehbar gelagert ist. Vorzugsweise werden die translatorische und rotatorische Bewegung des Gurtes bei der Rotation um den Kopf miteinander synchronisiert.

In formschlüssiger Verbindung mittels gestrichelt gezeichneten Verbindungsstiften **26.2, 26.3** und/oder kraftschlüssiger Verbindung durch Verschweißen, Verschrauben, Verkleben und/oder Vernieten wird mit einem Paar Winkelträgern **26a,** einem Paar Überrollrohren **20.2b** und einem Paar Seitenträgern **27.1a** oder vier Rohren **27.1** (nicht gezeichnet) der obere Teil des Rückenlehnenrahmens **3.4d** gebildet. Von diesen Überrollrohren ist das Gurtgehäuse **20.4c** oder Gurtgehäuse **20.4d** mit verschiebbarem Sicherheitsbügel **20.6** derart geführt, daß es von der Ruhestellung (gestrichelt gezeichnet) in die Betriebsstellung, oder umgekehrt, durch Elektromotor **20.5** entlang einer an beiden Winkelträgern **26a** befestigten Gewindespindel **20.1a** bewegbar ist. In Betriebsstellung liegen die Löcher des Überrollrohres und Gurtgehäuses **20.4d** übereinander, so daß beim Überschlagen eines offenen Cabrios oder Geländefahrzeuges beide Schenkel des Sicherheitsbügels **20.6** in die Löcher einrasten.

Über die Schloßzunge **2, 2a** in Steckverbindung mit Gurtschloß **4, 4a, 4b** ist das Ende ER des Gurtabschnittes **1.1** mit einem Verbindungsteil **1.2a, 1.2b (Fig. 12a, 12b)** verbunden, um eine Anzahl von Energieabsorbern zwecks Abbau der Aufprallenergie aufzunehmen. In einer weiteren Ausführungsform ist das Ende ER des Gurtabschnittes **1.1** mit Rückenlehnenrahmen oder mit Verbindungsteil **1.2a** oder **1.2b (Fig. 18)** für die Aufnahme von Energieabsorbern im Rückenlehnenrahmen **3.4d** verbunden, um auf Schloßzunge **2, 2a** und Gurtschloß zu verzichten. Um sehr große Energie bei turbulenzbedingtem Schütteln eines Flugzeuges oder bei Unfall eines schnell fahrenden Fahrzeuges oder ICE-Zuges abzubauen, wird in einer anderen Ausführungsform der Gurtaufroller **13**, dessen Verbindungsteil **1.2b** mit Energieabsorbern verbunden ist, in der Seite SR der Rückenlehne untergebracht. Das andere Ende EL kann für die Aufnahme von zusätzlichen Energieabsorbern nützlich gemacht werden. Siehe DE 197 58 497 C2. Die einwandfreie Operation bei Rückhalterung bei Transportmittel ohne Säulen wird durch den in der Rückenlehne untergebrachten Gurtaufroller **13** mit/ohne Verbindungsteil gewährleistet.

Bei der 1. und 2. Ausführungsform (**Fig.** 12a, 12b, 21) ist das Gurtschloß **4a, 4b, 4c** mit dem Rückenlehnenrahmen formschlüssig und/oder kraftschlüssig verbunden.

Das Entriegeln der Steckverbindung der Schloßzungen **2, 2a, 11** und/oder **25** mit den Gurtschlössern **14, 14a, 15, 15a** (**Fig.** 1) und Gurtschlössern **18, 18a, 18b, 18.1 bis 18.3, 19, 19a, 19b, 19.1 bis 19.3 (Fig.** 23) bei einer Sitzanordnung, insbesondere für Kinder, sowie Grurtschlössern **7, 8, 8a bis 8d** (**Fig.** 1, 14) erfolgt über die Betätigung der Generallösetaste **84** zum Aktivieren der Auslösekabel **4.2** und/oder Elektromotoren **4.2b,** wodurch die Lösetasten **84a, 84b** der Gurtschlösser **(Fig.** 12a, 12b, 21) bewegt werden.

In der 1. Ausführungsform gemäß **Fig.** 19-21 wird eine Höhen- und Breitenverstelleinrichtung **27** mit einem Block **29,** dem Gurtschloß **18.3, 19.3,** einem Paar Rohren **27.1** mit Vielzahl von Sperrkerben in form- und kraftschlüssiger Verbindung mit Winkelträger **26a** und einem Paar Rohren **27.4** sowie dazugehörigen Rohrteilen **27.5** bis **27.9** dargestellt. Der Block **29** wird aus einem Paar Außenrohren **27.3,** einem Paar Rohren **27.2** und einem Verbindungsstück zwischen allen Rohren gebildet. Mit Schlitzen der Innenrohre **27.4** ist der Sperrgriff **27.5** form- und kraftschlüssig verbunden.

In die Außenrohre **27.3** werden diese Innenrohre **27.4** eingeschoben und durch Federn **27.6** vorgespannt. Jede Feder **27.6** sitzt an einer durch Schieben des Stiftes **27.8** in die Löcher des Innenrohres **27.4** gesicherten Buchse **27.7** und drückt gegen eine Haltescheibe **27.9** des Außenrohres **27.3.**
Mit einem Paar Sperrkerben der Rohre **27.1** ist der Sperrgriff **27.5** in Eingriff. Nach Entriegelung durch Herausziehen des Sperrgriffes **27.5** aus beiden Sperrkerben ist die Verstelleinrichtung **27** mit dem Gurtschloß (**Fig**. 20, 22) höhenverstellbar.
Die Breitenverstellung kann vorgenommen werden, nachdem die Sperrung zwischen einem durch Feder **18.5** vorgespannten Sperrhebel **18.10** und einer der Sperrkerben q, r, s usw. (in **Fig.** 20, 22 gestrichelt gezeichnet) durch Bewegung des Sperrhebels in Pfeilrichtung (**Fig.** 21) aufgehoben wird. Dadurch ist das Gehäuse **18.12,** dessen Einrastzunge **4.10c** mit dem Gurtschloß **4c** formschlüssig verbunden ist, entlang den beiden Außenrohren **27.3** verschiebbar.
Von der U-förmigen Schloßzunge **25** (**Fig.** 19, 23) ist der Gurtabschnitt **1.1, 1.2** lose geführt und durch einen Schnellsperrteil **25.1** lose arretiert.

Für nebeneinanderliegende Sitze mit normaler bis hoher Rückenlehne **3.2a** bis **3.2d** in Fahrzeug, Van, Bus, Zug und Flugzeug ist ein einziger Sperrgriff **27.5** zur Bedienung einer Höhen- und Breitenverstelleinrichtung **27a** jedes Sitzes **3c** mit z.B. drei Paar Öffnungen **18.1 / 19.1 bis 18.3 /19.3** zur Aufnahme mindestens eines Paares Schloßzungen **25** bei der 2. Ausführungsform gemäß **Fig.** 22, 23 ratsam.
An den Außenrohren **27.3** sind Teile **18.3, 19.3, 27.6 bis 27.9a, 27.11** angebracht. Aus diesen Teilen, zwei Paar Außenrohren **27.3,** zwei Paar Rohren **27.2** und einem Paar Verbindungsstücken zwischen allen Rohren wird der Block **29a** zusammengebaut.
Mit Schlitzen der Innenrohre **27.4** ist der Sperrgriff **27.5** formschlüssig und durch Stifte **27.12** kraftschlüssig verbunden. Nach Schieben dieser Innenrohre in die sie umgebenden

Außenrohre **27.3** ist die Sperrplatte **27.10** mit den Schlitzen jener Innenrohre formschlüssig und durch Stifte **27.12** kraftschlüssig verbunden.
Nach Sicherung einer Haltescheibe **27.9a** durch Sicherungsringe **27.11** sowie beider Buchsen **27.7a** durch Schieben der Stifte **27.8** in die Löcher der Innenrohre **27.4** und Längslöcher der Außenrohre **27.3** werden die Innenrohre samt Sperrgriff **27.5** durch Federn **27.6** vorgespannt. Mit zwei Paar Sperrkerben der Rohre **27.1** sind der Sperrgriff **27.5** und die mit Sperrgriff **27.5** gekoppelte Sperrplatte **27.10** in Eingriff. Nach Entriegelung durch Herausziehen des Sperrgriffes **27.5** sind beidseitige Sperrzustände aufgehoben und ist die Verstelleinrichtung **27a** höhenverstellbar.

## Patentansprüche

1. Rückhaltesystem zur Erhöhung des Insassenschutzes für Flugzeug, Zug oder Fahrzeug, insbesondere Kraftfahrzeug, mit
- einem am Boden **(6)** oder Sitzrahmen **(3.3, 3.3a** bis **3.3d)** angeordneten Gurtschloß **(9.1)** und einem aus mehreren Gurtabschnitten **(1.1** bis **1.4)** bestehende, ein- oder zweiteiligen Sicherheitsgurt **(1, 1a** bis **1d),** dessen erstes Ende (EL) mit einem Gurtaufroller **(13),** einer Klemmeinrichtung und einem Umlenkbeschlag **(12)** am Fahrzeugaufbau oder an einer Seite (SL) einer Rückenlehne **(3.2, 3.2a bis 3.2d)** angeordnet ist;
- mindestens einer auf dem Sicherheitsgurt **(1, 1a bis 1d)** beweglichen Schloßzunge **(9, 11, 25)** und
- einem am Sitzrahmen **(3.3, 3.3a** bis **3.3d)** befestigten Gurtumlenker **(17),** der für ein Umlenken und eine lose Führung der Gurtabschnitte **(1.1,1.3)** vorgesehen ist;
**dadurch gekennzeichnet, daß** der einteilige Sicherheitsgurt **(1, 1a** bis **1d)** mit
a) einem am Boden (6) oder Schweller befestigten Gurtumlenker (**17**) versehen ist,
wobei
b) der Beckengurtabschnitt **(1.3)** den Unterkörper **(96)** des Insassen durch eine Steckverbindung der beweglichen Schloßzunge **(9)** mit dem Gurtschloß **(9.1)** sichert und
c) eine X-förmige Anordnung der einander überkreuzend verlaufenden Brustgurtabshnitte **(1,1, 1.2)** vor dem Oberkörper **(95)** des Insassen ausgebildet ist,
- durch eine Steckverbindung einer weiteren Schloßzunge **(2),** welche am anderen Ende (ER) des Brustgurtabschnittes **(1.1)** angeordnet ist, mit einem Gurtschloß **(4,** **4a** bis **4c, 14, 14a, 18, 18a, 18b, 18.1** bis **18.3),** das an der anderen Seite (SR) der Rückenlehne angeordnet ist; oder
- durch eine Steckverbindung einer am anderen Ende (ER) des Brustgurtabschnittes **(1.1)** angeordneten, weiteren Schloßzunge **(2),** welche an einer Gurtzuführeinrichtung **(20a, 20b)** befestigt ist, mit einem Gurtschloß (**4**), das an einer Oberkante auf der Seite (SR) der Rückenlehne angeordnet ist, wobei die Gurtzuführeinrichtung **(20a, 20b)** von einer Ruhestellung in eine Betriebsstellung verfährt; oder
- durch eine Positionierung des Brustgurtabschnittes (**1.1**), dessen Ende (ER) an oder in der Seite (SR) der Rückenlehne angeordnet ist, mittels einer Gurtzuführeinrichtung **(20, 20c, 20d)** von einer Ruhestellung in eine Betriebsstellung.

2. Rückhaltesystem nach Anspruch 1, **dadurch gekennzeichnet, daß** der aus mehreren Gurtabschnitten **(1.1** bis **1.4)** bestehende, zweiteilige Sicherheitsgurt **(1, 1a bis 1d)** sus einem mit mindestens zwei Schloßzungen **(2, 9, 11, 25)** versehenen Dreipunkt-Sicherheitsgurt **(1c)** und einem Brustgurt **(1.12, 1.12a)** gebildet ist,
a) an dessen Ende ein Gurtschloß **(4e)** und dessen anderes Ende (ER) in oder an der anderen Seite (SR) der Rückenlehne **(3.2, 3.2a** bis **3.2d)** oder an mindestens einem Stützrohr **(3.61)** einer Kopfstütze **(3.6a)** oder an der Kopfstütze **(3.6a)** angeordnet ist;
wobei
b) die Schloßzunge **(2)** am Ende eines Brustgurtabschnittes **(1.11)** des Dreipunkt-Sicherheitsgurtes **(1e)** angeordnet ist und
c) bei der Rückhalterung des Insassen durch die Steckverbindung der Schloßzunge **(9)** mit dem Gurtschloß **(9.1)** und eine Bildung des Brustgurtabschnittes **(1.1)** mittels einer Steckverbindung der Schloßzunge **(2)** mit dem Gurtschloß **(4e)** eine ausreichende Länge (1₁) des Brustgurtabschnittes **(1.11)** aus dem Gurtumlenker **(17)** hinausragt.

3. Rückhaltesystem nach Auspruch 2, **dadurch gekennzeichnet, daß** das Ende (ER) des Brustgurtes **(1.12)** mit einem 2. Gurtaufroller **(13a)** versehen ist, der in der Seite (SR) der Rückenlehne **(3.2)** angeordnet ist und dessen Federkraft geringer als die des Gurtaufrollers **(13)** ist.

4. Rückhaltesystem nach Ansprüchen 1 und 2, **dadurch gekennzeichnet, daß** der Brustgurt **(1.12a)** mit einer Schloßzunge **(2a)** versehen ist, die mit dem Gurtschloß (**4, 4a bis 4c, 14, 14a, 18, 18a, 18b, 18.1 bis 18.3)** einsteckbar verbunden ist.

5. Rückhaltesystem nach mindestens einem der vorgenannten Ansprüche, **dadurch gekennzeichnet, daß** der Sicherheitsgurt **(1)** mit der manuell oder durch eine Antriebseinrichtung betätigbaren Gurtzuführeinrichtung **(20a, 20b)** verbunden ist, die folgendes aufweist:
a) ein Gurtgehäuse **(20.4a),** das mit dem ersten Ende eines Zuführarmes **(20.2a)** verbunden ist und die Schloßzunge **(2, 2a)** trägt; und
b) ein in der Rückenlelme oder im Stützrohr **(3.61)** der Kopfstütze **(3.6a)** drehbar gelagertes Führungsrohr **(20.1),** an dem das andere Ende des Zuführarmes **(20.2a)** befestigt ist;
wobei bei der Steckverbindung der Schloßzunge **(9)** mit dem Gurtschloß **(9.1)** im
Beckenbereich des Insassen die Schloßzunge **(2, 2a)** des Brustgurtabschnittes **(1.1)** ins Gurtschloß **(4)** durch eine rotatorische Bewegung des Führungsrohres **(20.1)** einrastet.

6. Rückhaltesystem nach mindestens einem der Ansprüche 1 bis 4, **dadurch gekennzeichnet, daß**
a) das Ende (ER) des Brustgurtabschnittes **(1.1)** mit dem Rückenlehnenrahmen **(3.4)** oder einem für Energieabsorber vorgesehenen Verbindungsteil **(1.2a, 1.2b)** verbunden ist; und
b) bei Steckverbindung der Schloßzunge **(9)** mit dem Gurtschloß **(9.1)** der Brustgurtabschnitt **(1.1)** von der Ruhestellung in eine Betriebsstellung durch eine translatorische und/oder rotatorische Bewegung mindestens eines Zuführteiles **(20.2, 20.4c, 20.4d)** der manuell oder durch eine Antriebseinrichtung betätigbaren Gurtzuführeinrichtung **(20, 20c, 20d)** positioniert ist.

7. Rückhaltesystem nach Anspruch 6, **dadurch gekennzeichnet, daß** die Gurtzuführeinrichtung **(20c, 20d)** in eine Überrolleinrichtung mit zwei Überrollrohren (**20.2b**) eingebunden ist, welche ihrerseits in einen Rückenlehnenrahmen **(3.4d)** eingebunden ist, entlang dessen zwei Überrollrohren **(20.2b),** von denen eines Löcher aufweist, das Gurtgehäuse **(20.4d)** mit einem verschiebbaren Sicherheitsbügel **(20.6)** verschiebbar ist, wobei
- in einer Betriebsstellung die Löcher des Gurtgehäuses **(20.4d)** und Überrollrohres **(20.2b)** übereinanderliegen und
- nach Überschreitung eines Schwellwertes beide Schenkel des Sicherheitsbügels **(20.6)** in die Löcher einrasten, die translatorische Bewegung des Gurtgehäuses **(20.4d)** blockieren und der Sicherheitsbügel **(20.6)** den Gurtabschnitt (**1.1**) festklemmt.

8. Rückhaltesystem nach mindestens einem der vorgenannten Ansprüche, **dadurch gekennzeichnet, daß** der Beckengurtabschnitt **(1.3)** durch mindestens eine bewegliche Schloßzunge **(11, 25)** in Abschnitte **(1.3R, 1.3L)** unterteilt ist, welche beide Oberschenkel des Insassen nach einer Steckverbindung der Schloßzunge **(11, 25)** mit einem weiteren in oder an dem Sitzkissen **(3.1, 3.1a bis 3.1d)** angeordneten Gurtschloß **(7, 8, 8a bis 8d)** sichern.

9. Rückhaltesystem nach mindestens einem der vorgenannten Ansprüche, **dadurch gekennzeichnet, daß** eine Höhen- und Breitenverstelleinrichtung **(27)** des Rückenlehnenrahmens **(3.4d)** vorgesehen ist, die
- ein Paar Rohre **(27.1)** mit einer Vielzahl von Sperrkerben, wovon ein Paar der Sperrkerbeu in Eingriff mit einem Sperrgriff **(27.5)** ist, welcher zur Entriegelung herausgezogen und nach einer Höheneinstellung zur Verriegelung losgelassen wird und
- einen Block **(29)** bestehend aus einem Paar Rohren (**27.2**), die entlang Rohren (**27.1**) verschiebbar sind, einem Verbindungsstück zwischen allen Rohren **(27.2,27.3)** und einem Paar Außenrohren **(27.3),** worin sich die durch Federn **(27.6)** unter Zuhilfenahme der Teile **(27.7 bis 27.9)** vorgespannten Innenrohre **(27.4)** in einer form- und kraftschlüssigen Verbindung mit dem Sperrgriff **(27.5)** bewegen;
- eine entlang einem der beiden Außenrohre **(27.3)** angeordnete Vielzahl von Sperrkerben (q, r, s); und
- mindestens ein Gurtschloß **(18.3, 19.3)** bestehend aus einem Gurtschloß **(4c)** zur Steckverbindung mit der Schloßzunge **(25)** und einem mit jenem Gurtschloß formschlüssig verbundenen, entlang jenen Außenrohren **(27.3)** verschiebbaren Gehäuse **(18.12),** welches durch eine Sperrung mittels eines durch eine Feder **(18.5)** vorgespannten Sperrhebels **(18.10)** in einer Sperrkerbe(r) gesperrt und nach einem Ziehen des Sperrhebels über die Breite der Rückenlehne verstellt ist, umfaßt.

10. Rückhaltesystem nach mindestens einem der Ansprüche 1 bis 8, **dadurch gekennzeichnet, daß** eine Höhen- und Breitenverstelleinrichtung **(27a)** des Rückenlehnenrahmens **(3.4d)** vorgesehen ist, die
- zwei Paar Rohre **(27.1)** mit einer Vielzahl von Sperrkerben, wovon zwei Paarein gemeinsamem Eingriff mit einem mit einer Sperrplatte **(27.10)** gekoppelten Sperrgriff(**27.5**) sind, der zur gemeinsamen Entriegelung herausgezogen und nach einer Höheneinstellung zur gemeinsamen Verriegelung losgelassen wird und
- einen Block **(29a)** bestehend aus zwei Paar Rohren **(27.2)**, die entlang Rohren **(27.1)** verschiebbar sind, einem Paar Verbindungsstücken zwischen allen Rohren **(27.2, 27.3)** und einem Paar Außenrohren **(27.3),** worin sich die durch Federn **(27.6)** unter Zuhilfenahme der Teile **(27.7a, 27.8, 27.9a, 27.11)** vorgespannten Innenrohre **(27.4)** in einer form- und kraftschlüssigen Verbindung mit den Sperrteilen **(27.5, 27.10)** bewegen;
- eine entlang einem der beiden Außenrohre **(27.3)** angeordnete Vielzahl von Sperrkerben (q, r, s); und
- ein Paar Gurtschlösser **(18.3, 19.3)** bestehend jeweils aus einem Gurtschloß **(4c)** zur Steckverbindung mit der Schloßzunge **(25)** und einem mit jenem Gurtschloß formschlüssig verbundenen, entlang jenen Außenrohren **(27.3)** verschiebbaren Gehäuse **(18.12),** welches durch eine Sperrung mittels eines durch eine Feder **(18.5)** vorgespannten Sperrhebels **(18.10)** in einer Sperrkerbe(r) gesperrt und nach einem Ziehen des Sperrhebels über die Breite der Rückenlehne verstellt ist, umfaßt

11. Rückhaltesystem nach mindestens einem der vorgenannten Ansprüche, **dadurch gekennzeichnet, daß** der Gurtumlenker **(17)** ein Gehäuse mit einem Befestigungsloch und einen Stift **(17.1),** durch dessen Anordnung im Gehäuse eine Aussparung gebildet ist, aufweist.

12. Rückhaltesystem nach Anspruch 11, **dadurch gekennzeichnet, daß** der Stift **(17.1)** von einer Hülse **(17.2)** umgeben ist.

13. Rückhaltesystem nach mindestens einem der Ansprüche 11 und 12, **dadurch gekennzeichnet, daß** der Gurtumlenker **(17)** einstückig ausgebildet ist.

14. Rückhaltesystem nach mindestens einem der Ansprüche 11 bis 13, **dadurch gekennzeichnet, daß** die Schloßzunge **(2)** von der Aussparung des Gurtumlenkers **(17)** lose gehalten ist.

15. Rückhaltesystem nach mindestens einem der Ansprüche 1, 2, 4 und 14, **dadurch gekennzeichnet, daß** die in einer Ruhestellung griffgünstige Schloßzunge **(2, 2a)** in einem an der Rückenlehne **(3.2),** Säule (**91**) oder dem Sitzkissen **(3.1)** angeordneten Gurtschloß **(16, 16a, 16b)** abgelegt ist.

16. Rückhaltesystem nach mindestens einem der Ansprüche 5 bis 7, **dadurch gekennzeichnet, daß** die Gurtzuführeinrichtung **(20, 20a bis 20d)** durch mindestens einen Elektromotor **(20.5)** angetrieben ist.

17. Rückhaltesystem nach Anspruch 16, **dadurch gekennzeichnet, daß** bei einer rotatorischen Bewegung des Zuführarmes **(20.2)** mit dem Gurtabschnitt **(1.1)** die Antriebseinrichtung der Gurtzuführeinrichtung **(20d)** die Rotation des Zuführarmes mit der translatorischen Bewegung des Gurtgehäuses **(20.4d)** synchronisiert.

18. Rückhaltesystem nach Anspruch 5 oder 16, **dadurch gekennzeichnet, daß** das Gurtgehäuse **(20.4a)** durch ein Verschieben entlang dem Zuführarm **(20.2a)** in der Höhe verstellt wird, wobei in der Betriebsstellung die Schloßzunge **(2, 2a)** in eines der Gurtschlösser **(4, 14, 14a, 18)** verrastbar ist.

19. Rückhaltesystem nach mindestens einem der Ansprüche 1 bis 7 und 16, **dadurch gekennzeichnet, daß** ein im Bereich der Oberkante auf der Seite (SL) der Rückenlehne befindlicher Gurtumlenker **(5b)** durch ein Verschieben eines Griffes **(5.2, 27.5)** in der Höhe verstellt wird.

20. Rückhaltesystem nach mindestens einem der vorgenannten Ansprüche, **dadurch gekennzeichnet, daß** der Gurtumlenker **(5a)** an der Kopfstütze **(3.6a)** befestigt ist.

21. Rückhaltesystem nach mindestens einem der Ansprüche **5, 16, 18** und **19, dadurch gekennzeichnet, daß** am Führungsrohr **(20.1)** der Gurtzuführeinrichtung **(20a, 20b)** eine radial verstellbare Verstelleinheit **(20.3)** und/oder ein höhenverstellbares Gurtgehäuse **(20.4a)** für die Schloßzunge **(2, 2a)** angeordnet ist.

22. Rückhakesystem nach Anspruch 6, **dadurch gekennzeichnet, daß** die Gurtzuführeinrichtung **(20)** in der Ruhestellung oder Betriebsstellung in der Rückenlehne versenkt ist.

23. Rückhaltesystem nach mindestens einem der Ansprüche 21 und 22, **dadurch gekennzeichnet, daß** die Gurtzuführeinrichtung **(20)** folgende Teile umfaßt
- ein Gurtzuführblech **(20.9, 20.9a),** das für ein loses Halten des Gurtabschnittes **(1.1)** über dem Kopf während der Rotation und für eine Aufnahme des Zuführarmes **(20.2)** in der Betriebsstellung vorgesehen ist, und
- den Zuführarm **(20.2),** an dessen erstem Ende ein Gurthalter **(20.8)** zu einer losen Führung des Gurtabschnittes **(1.1)** und an dessen anderem Ende das im Lagergehäuse **(20.10)** des Rückenlehnenrahmens drehbar gelagerte Führungsrohr **(20.1)** fest angebracht ist;
wobei nach einer Betätigung mindestens eine Antriebseinrichtung den Zuführarm (**20.2**) in der Ruhestellung über die Kopfhöhe hochhebt, das Führungsrohr **(20.1)** samt dem Zuführarm **(20.2)** und Gurtabschnitt **(1.1)** um den Kopfbis zum Einschieben des Stiftes des Zuführarmes ins Loch des Gurtzuführbleches **(20.9)** oder ins Halteloch **(20.11)** des Gurtzuführbleches **(20.9a)** schwenkt und anschließend in der Betriebsstellung das Führungsrohr **(20.1),** den Zuführarm **(20.2)** und das Gurtzuführblech **(20.9, 20.9a)** in der Rückenlehne versenkt.

24. Rückhaltesystem nach mindestens einem der vorgenannten Ansprüche, **dadurch gekennzeichnet, daß** der Gurtabschnitt **(1.1)** von der Ruhestellung in eine Betriebsstellung durch die Antriebseinrichtung der Gurtzuführeinrichtung **(20, 20a bis 20d)** positioniert wird, welche aktiviert wird, durch
- eine Betätigung eines Schalters; oder
- ein Drücken einer Generallösetaste **(84)** des Gurtschlosses **(9.1);** oder
- eine Betätigung eines im Gurtschloß **(9.1)** eingebauten Schalters nach einer Berührung mit einem Nocken der Scbloßzunge **(9)** beim Einrasten ins Gurtscbloß; oder
- ein Starten des Motors oder ein Schließen der Fahrzeugtür oder ein Aktivieren eines am oder im Sitz angebrachten Sensors beim Sitzen.

25. Rückhaltesystem nach Anspruch 24, **dadurch gekennzeichnet, daß** nach einem Erreichen der Betriebsstellung die Antriebseinrichtung manuell oder selbständig ausgeschaltet wird.

26. Rückhaltesystem nach mindestens einem der vorgenannten Ansprüche, **dadurch gekennzeichnet, daß** bei Überschreitung eines Anbietezyklus für das Einstecken der Schloßzunge **(2, 2a)** ins Gurtschloß **(4, 4a bis 4c, 14, 14a, 18)** der Gurtabschnitt **(1.1)** von der Betriebsstellung in die Ruhestellung zurückgebracht wird.

27. Rückhaltesystem nach mindestens einem der vorgenannten Ansprüche, **dadurch gekennzeichnet, daß** durch ein Drücken der Generallösetaste **(84)** des Gurtschlosses **(9.1)** ein Auslösekabel **(4.2)** oder ein Elektromotor **(4.2b)** zur Betätigung einer Lösetaste **(84a, 84b)** des Gurtschlosses **(4a bis 4c)** aktiviert ist, wodurch die Schloßzunge im Gurtschloß entriegelt wird.

28. Rückhaltesystem nach Anspruch 27, **dadurch gekennzeichnet, daß** durch das Drücken der Generallösetaste **(84)** die Verbindung aller Schloßzungen **(2, 2a, 9, 11, 25)** mit den Gurtschlössern **(4, 4a bis 4c, 14, 14a, 18, 18a, 18b, 18.1 bis 18.3, 15, 15a, 19, 19a, 19b, 19.1 bis 19.3, 7, 8, 8a, 8d, 9.1)** entriegelt wird.

29. Rückhaltesystem nach mindesteus einem der Ansprüche 27 und 28, **dadurch gekennzeichnet, daß** durch das Drücken der Generallösetaste **(84)** die Antriebseinrichtung der Gurtzuführeinrichtung **(20, 20a** bis **20d)** den Gurtabschnitt **(1.1)** von der Betriebsstellung in die Ruhestellung verfährt.

30. Rückhaltesystem nach mindestens einem der Ansprüche 1 bis 26, **dadurch gekennzeichnet, daß** am Sitzkissen **(3.1, 3.1a** bis **3.1d)** eine Drucktaste **(84o)** angeordnet ist, durch deren Drücken ein Auslösekabel **(4.2)** oder ein Elektromotor **(4.2b)** zur Betätigung einer Lösetaste **(84a, 84b)** des Gurtschlosses **(4a bis 4c)** aktiviert wird, wodurch die Schloßzunge im Gurtschloß entriegelt wird.

31. Rückhaltesystem nach Anspruch 30, **dadurch gekennzeichnet, daß** durch ein Drücken der Drucktaste **(84o)** die Verbindung aller Schloßzungen **(11, 25)** mit den Gurtschlössern **(7, 8, 8a, 8d)** des Sitzkissens entriegelt wird.

32. Rückhaltesystem nach mindestens einem der vorgenannten Ansprüche, **dadurch gekennzeichnet, daß** der Gurtabschnitt **(1.1)** vor dem Erreichen der Ruhestellung durch einen Gurtfänger **(20.7, 20.7a)** aufgefangen wird.

33. Rückhaltesystem nach mindestens einem der vorgenannten Ansprüche, **dadurch gekennzeichnet, daß** die Schloßzunge **(25)** mit einem Schnellsperrteil **(25.1)** versehen ist.

## Claims

1. A restraint system, increasing the survival chance for aeroplane, train or vehicle, particularly motor vehicle, equipped with
- a buckle assembly **(9.1),** arranged to the floor **(6)** or seat frame **(3.3, 3.3a to 3.3d),** a one-or two-piece seat belt **(1, 1a to 1d),** consisting of several belt portions **(1.1 to 1.4),** the belt end (EL) of which, equipped with a belt retractor **(13),** a clamping device and a D-ring **(12),** is arranged to the vehicle body or a side (SL) of a seat backrest **(3.2, 3.2a to 3.2d),**
- at least one latch plate **(9, 11, 25),** movable along the seat belt **(1, 1a to 1d),** and
- a belt deflector **(17),** which is arranged to the seat frame **(3.3, 3.3a to 3.3d),** to deflect and loosely guide the belt portions **(1.1, 1.3);**
**characterised in that** the one-piece seat belt **(1, 1a to 1d)** is provided with
a) a belt deflector **(17),** which is fastened to the floor (**6**) or side rail; where
b) the lower part of body **(96)** is restrained by the lap belt portion **(1.3)** when the latch plate **(9)** is plug-in connected to the buckle assembly **(9.1)** and
c) the upper part of body **(95)** is restrained by extending the shoulder belt portions **(1.1, 1.2)** crosswise in an X-shape
- when an additional latch plate **(2),** fastened to the other end (ER) of the shoulder belt portion **(1.1),** is plug-in connected to a buckle assembly **(4, 4a to 4c, 14, 14a, 18, 18a, 18b, 18.1 to 18.3),** arranged to the other side (SR) of the seat backrest; or
- when an additional latch plate **(2),** fastened to a belt-feeding device **(20a, 20b),** moving from a resting position to an operating position, is plug-in connected to a buckle assembly **(4),** located on the top edge of the seat backrest at the side (SL) thereof; or
- when the shoulder belt portion **(1.1),** the belt end (ER) of which is arranged to the other side (SR) of the seat backrest, is moved by a belt-feeding device **(20, 20c, 20d)** from a resting position to an operating position.

2. A restraint system according to claim 1, **characterised in that** the two-piece seat belt **(1, 1a to 1d),** consisting of several belt portions **(1.1 to 1.4),** comprises a three-point seat belt **(1e),** provided with at least two latch plates **(2, 9, 11, 25),** and a shoulder belt **(1.12, 1.12a),**
a) to the end of which a buckle assembly **(4e)** is arranged and the other end is arranged in or to the other side (SR) of the seat backrest **(3.2, 3.2a to 3.2d)** or at least one supporting tube **(3.61)** of a head rest **(3.6a)** or to the head rest **(3.6a)**;
where
b) the latch plate **(2)** is arranged to the end of a shoulder belt portion **(1.11)** ofthe three-point seat belt **(1e)** and
c) the passenger is restrained by the plug-in connection of the latch plate **(9)** with the buckle assembly **(9.1)** and by defining the shoulder belt portion **(1.1)** upon a plug-in connection of the latch plate **(2)** with the buckle assembly **(4e),** where the shoulder belt portion **(1.11)** projects through the belt deflector **(17)** at a sufficient length **(1**_{**1**}**).**

3. A restraint system according to claim 2, **characterised in that** the belt end (ER) of the shoulder belt **(1.12)** is provided with a second belt retractor **(13a),** which, arranged in the side (SR) of the seat backrest **(3.2),** has a spring force, which is less than of the belt retractor **(13).**

4. A restraint system according to claims 1 and 2, **characterised in that** the shoulder belt **(1.12a)** is provided with a latch plate **(2a),** which is plug-in connected to the buckle assembly **(4, 4a to 4c, 14, 14a, 18, 18a, 18b, 18.1 to 18.3).**

5. A restraint system according to at least one of the preceding claims, **characterised in that** the belt-feeding device **(20a, 20b),** operated manually or by a drive apparatus, consists of
a) a belt housing **(20.4a),** equipped with the latch plate **(2, 2a)** and connected to one end of an operating arm **(20.2a),** the other end of which is connected to
b) a guide tube **(20.1),** pivotally attached in the seat backrest or the supporting tube **(3.61)** of the head rest **(3.6a);**
where upon plug-in connection of the latch plate **(9)** with the buckle assembly **(9.1)** the latch plate **(2, 2a)** of the shoulder belt portion **(1.1)** is plug-in connected to the buckle assembly **(4)** by a rotatable movement of the guide tube **(20.1).**

6. A restraint system according to at least one of the claims 1 to 4, **characterised in that**
a) the end (ER) of shoulder belt portion **(1.1)** is connected to a seat backrest frame **(3.4)** or a coupling member **(1.2a, 1.2b),** to receive energy absorbers; and
b) the shoulder belt portion **(1.1)** is moved from the resting position to the operating position by translatory and/or rotatory movement of at least one feeding part **(20.2, 20.4c, 20.4d)** of a belt-feeding device **(20, 20c, 20d),** operated manually or by a drive apparatus.

7. A restraint system according to claim 6, **characterised in that** the belt-feeding device **(20c, 20d)** serves as a rollover device, which is a member of a seat backrest frame **(3.4d),** along two rollover tubes **(20.2b)** of which the belt housing **(20.4d),** having a movable safety bracket **(20.6),** is movable, where
- one of the rollover tubes **(20.2b)** is provided with holes;
- in the operating position the holes of the belt housing and the rollover tube **(20.2b)** are aligned with each other and
- in excess of a threshold value in the event of rollover both legs of the safety bracket protrude through the holes thereof, block the translatory movement of the belt housing and clamp the shoulder belt portion **(1.1).**

8. A restraint system according to at least one of the preceding claims, **characterised in that** the lap belt portion **(1.3),** provided with at least one movable latch plate **(11, 25),** is subdivided into two belt portions **(1.3R, 1.3L),** which restrain both thighs of the passenger upon plug-in connection of the latch plate **(11, 25)** with an additional buckle assembly **(7, 8, 8a** to **8d),** arranged in or to the seat cushion **(3.1, 3.1a** to **3.1d).**

9. A restraint system according to at least one of the preceding claims, **characterised in that** the height- and width-adjusting mechanism **(27)** comprises
- a pair of tubes **(27.1)** of the seat backrest frame **(3.4d),** having a plurality of locking slots, one pair of which is engaged with a locking handle **(27.5),** that can be pulled to disengage therefrom and released to engage, when the height is adjusted;
- a frame **(29),** consisting of a pair of tubes **(27.2),** movable along the tubes **(27.1),** a connecting part of all tubes **(27.2, 27.3)** and a pair of outer tubes **(27.3),** in which the inner tubes **(27.4)** are movable, biased by the springs **(27.6)** in co-operation with parts **(27.7** to **27.9)** and form- and force-locking connected to the locking handle **(27.5);**
- a plurality of locking slots (q, r, s), arranged along one of the outer tubes **(27.3);** and
- a buckle assembly **(18.3, 19.3),** consisting of a buckle assembly **(4c),** to connect to the latch plate, and a housing **(18.12),** form-locking connected to the buckle assembly, movable along the outer tubes **(27.3)** and secured by a pawl **(18.10),** biased by a spring **(18.5),** engaged with a locking slot (r) and disengaged therefrom by pulling the pawl to adjust to the width of the seat backrest.

10. A restraint system according to at least one of claims 1 to 8, **characterised in that** the height- and width-adjusting mechanism **(27a)** comprises
- two pairs of tubes **(27.1)** of the seat backrest frame **(3.4d),** having a plurality of locking slots, two pairs of which are in mutual engagement with two locking parts **(27.5, 27.10),** coupled to each other, disengaged therefrom by pulling the locking handle **(27.5)** and engaged therewith again upon release;
- a frame **(29a),** consisting of a pair of connecting parts of all tubes, a pair of tubes **(27.2)** movable along the tubes **(27.1),** and a pair of outer tubes **(27.3),** in which the inner tubes **(27.4)** are movable, biased by the springs **(27.6)** in co-operation with parts **(27.7a, 27.8, 27.9a, 27.11)** and form- and force-locking connected to the locking parts **(27.5, 27.10)**;
- a plurality of locking slots (q, r, s), arranged along one of the outer tubes **(27.3);** and
- two buckle assemblies **(18.3, 19.3)**, each of which consists of a buckle assembly **(4c),** for the purpose of plug-in connection to the latch plate, and a housing **(18.12),** form-locking connected thereto, movable along the outer tubes **(27.3)** and secured by a pawl **(18.10),** biased by a spring **(18.5),** engaged with a locking slot (r) and disengaged therefrom by pulling the pawl to adjust to the width of the seat backrest.

11. A restraint system according to at least one of the preceding claims, **characterised in that** the belt deflector **(17)** comprises a housing, having an attachment hole, and a pin **(17.1),** which is arranged in the housing to form an aperture.

12. A restraint system according to claim 11, **characterised in that** the pin **(17.1)** is surrounded by a sleeve **(17.2).**

13. A restraint system according to at least one of claims 11 and 12, **characterised in that** the belt deflector **(17)** is made of one piece.

14. A restraint system according to at least one of claims 11 to 13, **characterised in that** the latch plate **(2)** is loosely retained by the aperture of the belt deflector **(17).**

15. A restraint system according to at least one of claims 1, 2, 4 and 14, **characterised in that** the latch plate (**2, 2a**), easily accessible for the passenger intending to belt, in the resting position is connected to a buckle assembly **(16, 16a, 16b),** which is arranged to the seat backrest **(3.2),** post section **(91)** or seat cushion **(3.1).**

16. A restraint system according to at least one of claims 5 to 7, **characterised in that** the belt-feeding device **(20, 20a to 20d)** is operated by at least one electrical motor **(20.5).**

17. A restraint system according to claim 16, **characterised in that** the rotatable movement of the operating arm **(20.2)** together with the shoulder belt portion **(1.1)** and the translatory movement of the belt housing **(20.4d)** are synchronized by the drive apparatus of the belt-feeding device **(20d).**

18. A restraint system according to claim 5 or 16, **characterised in that** a belt housing **(20.4a)** is adjustable in height by moving two openings, facing each other, along the operating arm **(20.2a),** where in the operating position the latch plate **(2, 2a)** is inserted into one ofthe buckle assemblies **(4,14,14a,18).**

19. A restraint system according to at least one of claims 1 to 7 and 16, **characterised in that** a belt deflector **(5b),** located on the top edge ofthe seat backrest at the side (SL) thereof, is adjustable in height by moving a handle **(5.2, 27.5).**

20. A restraint system according to at least one of the preceding claims, **characterised in that** the belt deflector **(5a)** is attached to the head rest **(3.6a).**

21. A restraint system according to at least one of claims 5, 16, 18 and 19, **characterised in that** a radial-adjustable tube **(20.3)** and/or the height-adjustable belt housing **(20.4a),** having the latch plate **(2, 2a),** is/are arranged to the guide tube **(20.1)** of the belt-feeding device **(20a, 20b).**

22. A restraint system according to claim 6, **characterised in that** the belt-feeding device (20) in the resting or operating position is countersunk in the seat backrest.

23. A restraint system according to at least one of claims 21 and 22, **characterised in that** the belt-feeding device **(20)** comprises
- a belt-feeding plate **(20.9, 20.9a)** to maintain the shoulder belt portion **(1.1)** over the head rest **(3.6)** during the rotation and to receive the operating arm **(20.2);** and
- the operating arm **(20.2),** to one end of which a belt ring **(20.8)** is rigidly attached to loosely guide the shoulder belt portion **(1.1)** and to the other end of which a guide tube **(20.1),** pivotally attached to the bearing casing **(20.10)** of the seat backrest frame, is rigidly attached;
when at least one drive apparatus is activated, the operating arm **(20.2)** in the resting position is lifted up over the head, the guide tube **(20.1),** the operating arm **(20.2)** and the shoulder belt portion **(1.1)** are rotated over the head till the pin of the operating arm **(20.2)** is inserted into the hole of the belt-feeding plate **(20.9)** or the retaining hole **(20.11)** of the belt-feeding plate **(20.9a)** and the guide tube **(20.1),** the operating arm **(20.2)** and the belt-feeding plate **(20.9, 20.9a)** are countersunk in the operating position.

24. A restraint system according to at least one of the preceding claims, **characterised in that** the shoulder belt portion **(1.1)** is moveable from the resting position to the operating position by activating the drive apparatus of the belt-feeding device **(20, 20a** to **20d)** in response to
- actuating a switch; or
- depressing a master release button **(84)** of the buckle assembly **(9.1)**; or
- activating a switch, built in the buckle assembly **(9.1),** upon contact with a cam of the latch plate (**9**), when inserted therein; or
- starting the engine or closing the vehicle door or sitting on a pressure sensor, built to the seat.

25. A restraint system according to claim 24, **characterised in that** the drive apparatus is switched off manually or automatically when the operating position is reached.

26. A restraint system according to at least one of the preceding claims, **characterised in that** the drive apparatus is operable to return the shoulder belt portion **(1.1)** from the operating position to the resting position, when a dwell time, predetermined for the insertion of the latch plate **(2, 2a)** into the buckle assembly **(4, 4a to 4c, 14, 14a, 18),** is exceeded.

27. A restraint system according to at least one of the preceding claims, **characterised in that** upon a pressure on the master release button **(84)** of the buckle assembly **(9.1)** a release cable **(4.2)** or an electrical motor **(4.2b)** pulls the release button **(84a, 84b)** of the buckle assembly **(4a** to **4c)** to disengage the latch plate.

28. A restraint system according to claim 27, **characterised in that** upon the pressure on the master release button **(84)** all the latch plates **(2, 2a, 9, 11, 25)** are disengaged from the respective buckle assemblies **(4, 4a to 4c, 14, 14a, 18, 18a, 18b, 18.1 to 18.3, 15, 15a, 19, 19a, 19b, 19.1** to **19.3, 7, 8, 8a, 8d, 9.1).**

29. A restraint system according to at least one of claims 27 and 28, **characterised in that** on depressing the master release button **(84)** the drive apparatus of the belt-feeding device **(20, 20a** to **20d)** returns the shoulder belt portion **(1.1)** from the operating position to the resting position.

30. A restraint system according to at least one of claims 1 to 26, **characterised in that** on depressing a release button **(84o),** arranged to the seat cushion **(3.1, 3.1a to 3.1d),** a release cable **(4.2)** or an electrical motor **(4.2b)** pulls the release button **(84a, 84b)** of the buckle assembly (**4a to 4c**) to disengage the latch plate.

31. A restraint system according to claim 30, **characterised in that** on depressing the release button **(84o)** the latch plate **(11, 25)** is disengaged from the buckle assembly **(7, 8, 8a to 8d)** of the seat cushion.

32. A restraint system according to at least one of the preceding claims, **characterised in that** the shoulder belt portion **(1.1)** in the resting position is intercepted by a belt-catching element **(20.7, 20.7a).**

33. A restraint system according to at least one of the preceding claims, **characterised in that** the latch plate **(25)** is provided with a quick-release pin **(25.1).**

## Revendications

1. Système de retenue servant à augmenter la sécurité des passagers d'un avion, train ou véhicule, en particulier d'un véhicule automobile et comprenant les éléments suivants :
- une boucle de fermeture **(9.1)** disposée sur le plancher **(6)** ou sur le cadre du siège **(3.3, 3.3a à 3.3d)** et une ceinture de sécurité **(1, 1a à 1d)** en une seule ou en deux pièces, composée de plusieurs brins de sangle **(1.1 à 1.4)** dont la première extrémité (EL) est munie d'un enrouleur de sangle **(13),** d'un dispositif de serrage et d'une garniture de renvoi **(12),** ladite extrémité étant disposée sur la structure du véhicule ou sur un flanc (SL) d'un dossier **(3.2, 3.2a** à **3.2d)** ;
- au moins une languette de fermeture **(9, 11, 25)** mobile sur la ceinture de sécurité **(1, 1a à 1d),** ainsi que :
- un renvoi de sangle **(17)** fixé au cadre du siège **(3.3, 3.3a à 3.3d)** prévu pour renvoyer et guider de façon lâche les brins de sangle **(1.1,1.3)** ;
**caractérisé en ce que** la ceinture de sécurité en une pièce **(1, 1a à 1d)** est munie des éléments suivants :
a) du renvoi de sangle **(17)** fixé au plancher **(6)** ou au seuil du plancher,
b) du brin de sangle de bassin **(1.3)** retenant la partie inférieure du corps **(96)** du passager grâce à une jonction enfichable entre la languette de fermeture **(9)** mobile et la boucle de fermeture **(9.1),** et :
c) de brins de sangle thoraciques **(1.1, 1.2)** disposés en baudrier en X devant le torse **(95)** du passager, et ce dans les configurations suivantes :
- une autre languette de fermeture **(2)** disposée sur l'autre extrémité (ER) du brin de sangle thoracique **(1.1)** qui est enclenchée dans une boucle de fermeture **(4, 4a à 4c, 14, 14a, 18, 18a, 18b, 18.1** à **18.3)** disposée sur l'autre flanc (SR) du dossier ; ou :
- une autre languette de fermeture **(2),** disposée sur l'autre extrémité (ER) du brin de sangle thoracique **(1.1)** et fixée à un dispositif d'amenée de sangle **(20a, 20b),** qui est enclenchée dans une boucle de fermeture (**4**) disposée sur le bord supérieur du flanc (SR) du dossier, le dispositif d'amenée de sangle **(20a, 20b)** se déplaçant d'une position de repos à une position de service ; ou :
- en positionnant le brin de sangle thoracique **(1.1),** dont l'extrémité (ER) est disposée sur ou dans le flanc (SR) du dossier, d'une position de repos en une position de service à l'aide d'un dispositif d'amenée de sangle **(20, 20c, 20d).**

2. Système de retenue selon la revendication 1, **caractérisé en ce que** la ceinture de sécurité en deux pièces **(1, 1a à 1d)** comprenant plusieurs brins de sangle **(1.1** à **1.4)** est constituée par une ceinture de sécurité trois points **(1e)** munie d'au moins deux languettes de fermeture **(2, 9, 11, 25)** et par une sangle thoracique **(1.12, 1.12a),**
a) sur une extrémité de ladite sangle thoracique étant disposée une boucle de fermeture **(4e)**, tandis que l'autre extrémité (ER) est disposée dans ou sur l'autre flanc (SR) du dossier **(3.2, 3.2a à 3.2d)** ou sur au moins un tube d'appui **(3.61)** d'un appuie-tête **(3.6a)** ou sur l'appuie-tête (**3.6a)** ;
b) la languette de fermeture **(2)** étant disposée à la fin d'un brin de sangle thoracique **(1.11)** de la ceinture de sécurité trois points **(1e),** et :
c) lors de la retenue du passager à l'aide de la languette de fermeture **(9)** enclenchée dans la boucle de fermeture **(9.1)** et lors de la formation du brin de sangle thoracique **(1.1)** par la jonction enfichable entre la languette de fermeture (**2**) et la boucle de fermeture (**4e**), ledit brin de sangle thoracique **(1.11)** ressort du renvoi de sangle **(17)** sur une longueur suffisante (l₁).

3. Système de retenue selon la revendication 2, **caractérisé en ce que** l'extrémité (ER) de la sangle thoracique **(1.12)** est munie d'un deuxième enrouleur de sangle **(13a)** disposé dans le flanc (SR) du dossier **(3.2)** et dont la résilience est inférieure à celle de l'enrouleur de sangle **(13).**

4. Système de retenue selon les revendications 1 et 2, **caractérisé en ce que** la sangle thoracique **(1.12a)** est munie d'une languette de fermeture **(2a)** qui est enclenchée dans la boucle de fermeture **(4, 4a à 4c, 14, 14a, 18, 18a, 18b, 18.1 à 18.3).**

5. Système de retenue selon au moins l'une des revendications ci-devant, **caractérisé en ce que** la ceinture de sécurité **(1)** est reliée au dispositif d'amenée de sangle **(20a, 20b)** à actionnement manuel ou par dispositif d'entraînement, ledit dispositif d'amenée étant muni des éléments suivants :
a) d'un boîtier de sangle **(20.4a)** étant relié à la première extrémité d'un bras d'amenée **(20.2a)** et poilant la languette de fermeture **(2, 2a) ;** et :
b) d'un tube d'appui **(20.1)** logé orientable dans le dossier ou le tube d'appui **(3.61)** de l'appuie-tête **(3.6a)** auquel est fixée l'autre extrémité du bras d'amenée **(20.2a) ;**
pour constituer la jonction enfichable de la languette de fermeture **(9)** et de la boucle de fermeture **(9.1)** au niveau du bassin du passager, la languette de fermeture **(2, 2a)** du brin de sangle thoracique **(1.1)** s'enclenche dans la boucle de fermeture **(4)** au moyen d'un mouvement de rotation du tube de guidage **(20.1)**.

6. Système de retenue selon au moins l'une des revendications 1 à 4, **caractérisé en ce que** :
a) l'extrémité (ER) du brin de sangle thoracique **(1.1)** est reliée au cadre du dossier **(3.4)** ou à une pièce de jonction destinée à recevoir des absorbeurs d'énergie **(1.2a, 1.2b)** ; et :
b) la languette de fermeture **(9)** étant enclenchée dans la boucle de fermeture **(9.1),** le brin de sangle thoracique (**1.1**) est acheminé de la position de repos à la position de service par un mouvement de translation et/ou de rotation réalisé par au moins un dispositif d'amenée **(20.2, 20.4c, 20.4d)** du dispositif d'amenée de sangle **(20, 20c, 20d)** à actionnement manuel ou entraînement motorisé.

7. Système de retenue selon la revendication 6, **caractérisé en ce que** le dispositif d'amenée de sangle **(20c, 20d)** est intégré dans un dispositif d'arceaux de protection comprenant deux tubes de protection **(20.2b),** ledit dispositif étant intégré dans le cadre du dossier **(3.4d)** ; le long des deux tubes de protection **(20.2b)** dudit cadre, dont l'un est muni de trous, le boîtier de sangle **(20.4d)** peut être déplacé à l'aide d'un arceau de sécurité coulissable **(20.6) :**
- en position de service, les trous du boîtier de sangle **(20.4d)** et du tube de protection **(20.2b)** sont superposés, et :
- après avoir dépassé une valeur seuil, les deux branches de l'arceau de sécurité (20.6) s'enclenchent dans les trous, bloquant ainsi le mouvement de translation du boîtier de sangle **(20.4d),** l'arceau de sécurité **(20.6)** immobilisant par conséquent le brin de sangle **(1.1).**

8. Système de retenue selon au moins l'une des revendications ci-devant, **caractérisé en ce que** le brin de sangle de bassin **(1.3)** est subdivisé en sections **(1.3R, 1.3L)** par au moins une languette de fermeture **(11, 25)** mobile, lesdites sections retenant les deux cuisses du passager après avoir enclenché la languette de fermeture **(11, 25)** dans une autre boucle de fermeture **(7, 8, 8a à 8d)** disposée dans ou sur l'assise **(3.1, 3.1a à 3.1d).**

9. Système de retenue selon au moins l'une des revendications ci-devant, **caractérisé en ce qu'**il est prévu un dispositif de réglage de la hauteur et de la largeur **(27)** du cadre du dossier **(3.4d),** ledit dispositif comprenant les éléments suivants :
- une paire de tubes **(27.1)** munie d'un grand nombre d'encoches d'arrêt, une paire desdites encoches étant engagée avec un cliquet d'arrêt **(27.5)** ; pour déverrouiller, tirer le cliquet et relâcher pour verrouiller de nouveau, après avoir réglé la hauteur ;
- un bloc **(29)** comprenant une paire de tubes **(27.2)** coulissables le long de tubes **(27.1),** ainsi qu'une pièce de jonction entre tous les tubes **(27.2, 27.3)** et une paire de tubes extérieurs **(27.3)** dans lesquels sont logés les tubes intérieurs **(27.4)** prétendus à l'aide de ressorts **(27.6)** et des pièces **(27.7 à 27.9),** lesdits tubes intérieurs se déplaçant à conjugaison de force et de forme avec le cliquet **(27.5) ;**
- un grand nombre d'encoches d'arrêt (q, r, s) disposées le long des deux tubes extérieurs **(27.3)** ; et :
- au moins une boucle de fermeture **(18.3, 19.3)** comprenant une boucle de fermeture **(4c)** dans laquelle est enclenchée la languette de fermeture **(25),** ainsi qu'un boîtier **(18.12)** relié à conjugaison de force à ladite boucle de fermeture et coulissable le long des tubes extérieurs **(27.3)** cités ci-devant, ledit boîtier étant bloqué à l'aide d'un cliquet **(18.10)** prétendu par ressort **(18.5)** dans une encoche d'arrêt (r) ; en tirant sur le cliquet, il pourra être ajusté sur la largeur du dossier.

10. Système de retenue selon au moins l'une des revendications 1 à 8, **caractérisé en ce que** qu'il est prévu un dispositif de réglage de la hauteur et de la largeur **(27a)** du cadre du dossier **(3.4d),** ledit dispositif comprenant les éléments suivants :
- deux paires de tubes **(27.1)** munies d'un grand nombre d'encoches d'arrêt, deux paires desdites encoches étant engagées avec un cliquet d'arrêt **(27.5)** accouplé à une plaque d'arrêt **(27.10)** ; pour déverrouiller ledit cliquet et ladite plaque, tirer le cliquet et relâcher pour les verrouiller de nouveau, après avoir réglé la hauteur ;
- un bloc **(29a)** comprenant deux paires de tubes **(27.2)** coulissables le long de tubes **(27.1),** ainsi qu'une paire de pièces de jonction entre tous les tubes **(27.2, 27.3)** et une paire de tubes extérieurs **(27.3)** dans lesquels sont logés les tubes intérieurs **(27.4)** prétendus à l'aide de ressorts **(27.6)** et de toutes les pièces **(27.7a, 27.8, 27.9a, 27.11),** lesdits tubes intérieurs se déplaçant à conjugaison de force et de forme avec les pièces d'arrêt **(27.5, 27.10) ;**
- un grand nombre d'encoches d'arrêt (q, r, s) disposées le long des deux tubes extérieurs **(27.3)** ; et :
- une paire de boucles de fermeture **(18.3, 19.3)** comprenant chacune une boucle de fermeture **(4c)** dans laquelle est enclenchée la languette de fermeture **(25),** ainsi qu'un boîtier **(18.12)** relié à conjugaison de force à ladite boucle de fermeture et coulissable le long des tubes extérieurs **(27.3)** cités ci-devant, ledit boîtier étant bloqué à l'aide d'un cliquet **(18.10)** prétendu par ressort **(18.5)** dans une encoche d'arrêt (r) ; en tirant sur le cliquet, il pourra être ajusté sur la largeur du dossier.

11. Système de retenue selon au moins l'une des revendications ci-devant, **caractérisé en ce que** le renvoi de sangle **(17)** comprend un boîtier avec un trou de fixation et une broche **(17.1)**, ladite broche formant un évidement à l'intérieur du boîtier.

12. Système de retenue selon la revendication 11, **caractérisé en ce que** la broche **(17.1)** est gainée par une douille **(17.2).**

13. Système de retenue selon au moins l'une des revendications 11 et 12, **caractérisé en ce que** le renvoi de sangle **(17)** est d'un seul tenant.

14. Système de retenue selon au moins l'une des revendications 11 à 13, **caractérisé en ce que** la languette de fermeture **(2)** est maintenue de façon lâche par l'évidement du renvoi de sangle **(17).**

15. Système de retenue selon au moins l'une des revendications 1, 2, 4 et 14, **caractérisé en ce que** la languette de fermeture **(2, 2a),** facile à manier en position de repos, repose dans une boucle de fermeture **(16, 16a, 16b)** disposée sur le dossier **(3.2),** le montant **(91)** ou l'assise **(3.1).**

16. Système de retenue selon au moins l'une des revendications 5 à 7, **caractérisé en ce que** le dispositif d'amenée de sangle **(20, 20a à 20d)** est actionné par au moins un moteur électrique **(20.5).**

17. Système de retenue selon la revendication 16, **caractérisé en ce que** l'actionnement du dispositif d'amenée de sangle **(20d),** en cas d'un mouvement de rotation entre le bras d'amenée **(20.2)** et le brin de sangle **(1.1),** synchronise la rotation du bras d'amenée et le mouvement de translation du boîtier de sangle **(20.4d).**

18. Système de retenue selon la revendication 5 ou 16, **caractérisé en ce que** le boîtier de sangle **(20.4a)** est réglé en hauteur par un déplacement le long du bras d'amenée **(20.2a)** ; en position de service, la languette de fermeture **(2, 2a)** peut être enclenchée dans une des boucles de fermeture **(4, 14, 14a, 18).**

19. Système de retenue selon au moins l'une des revendications 1 à 7 et 16, **caractérisé en ce qu'**un renvoi de sangle **(5b)** situé sur le bord supérieur du dossier au flanc (SL) peut être réglé en hauteur par le déplacement d'une poignée **(5.2, 27.5).**

20. Système de retenue selon au moins l'une des revendications ci-devant, **caractérisé en ce que** le renvoi de sangle **(5a)** est fixé à l'appuie-tête **(3.6a).**

21. Système de retenue selon au moins l'une des revendications 5, 16, 18 et 19, **caractérisé en ce qu'**une unité de réglage réglable radialement **(20.3)** et/ou un boîtier de sangle **(20.4a)** réglable en hauteur destiné à la languette de fermeture **(2, 2a)** sont disposés sur le tube de guidage **(20.1)** du dispositif d'amenée de sangle **(20a, 20b).**

22. Système de retenue selon la revendication 6, **caractérisé en ce que** le dispositif d'amenée de sangle **(20)** est encastré dans le dossier en position de repos ou de service.

23. Système de retenue selon au moins l'une des revendications 21 et 22, **caractérisé en ce que** le dispositif d'amenée de sangle **(20)** comprend les éléments suivants :
- une tôle d'amenée de sangle **(20.9, 20.9a)** destinée à maintenir de façon lâche le brin de sangle **(1.1)** en-dessus de la tête pendant la rotation, ainsi qu'à recevoir le bras d'amenée **(20.2)** en position de service ; et :
- le bras d'amenée **(20.2),** sur la première extrémité duquel est monté fixe un dispositif de maintien de sangle **(20.8)** assurant le guidage lâche du brin de sangle **(1.1)** et sur l'autre extrémité duquel est monté fixe le tube de guidage **(20.1)** logé orientable dans le boîtier du palier **(20.10)** du dossier ;
et après avoir activé au moins un dispositif d'actionnement, ledit dispositif fait monter le bras d'amenée **(20.2)** en position de repos au-dessus du niveau de la tête, il fait basculer le tube de guidage **(20.1),** ainsi que le bras d'amenée **(20.2),** et le brin de sangle **(1.1)** autour de la tête jusqu'à insérer la broche du bras d'amenée dans le trou de la tôle d'amenée de sangle (**20.9**) ou dans le trou de retenue **(20.11)** de la tôle d'amenée de sangle **(20.9a)** ; ensuite, il encastre le tube de guidage **(20.1),** le bras d'amenée **(20.2)** et la tôle d'amenée de sangle **(20.9, 20.9a)** en position de service dans le dossier.

24. Système de retenue selon au moins l'une des revendications ci-devant, **caractérisé en ce que** le brin de sangle **(1.1)** est déplacé de la position de repos à la position de service par un dispositif d'actionnement du dispositif d'amenée de sangle (**20, 20a à 20d**), ledit dispositif d'actionnement étant activé comme suit :
- en appuyant sur un interrupteur, ou :
- en appuyant sur une touche de déverrouillage général **(84)** de la boucle de fermeture **(9.1),** ou :
- en actionnant un interrupteur incorporé dans la boucle de fermeture **(9.1)** après avoir touché une came de la languette de fermeture (**9**) au moment de l'enclenchement dans la boucle de fermeture; ou ;
- en démarrant le moteur ou en fermant la porte du véhicule ou en activant un senseur disposé sur ou dans le siège au moment où le passager s'assoit.

25. Système de retenue selon la revendication 24, **caractérisé en ce que** le dispositif d'actionnement est déconnecté manuellement ou automatiquement après avoir atteint la position de service.

26. Système de retenue selon au moins l'une des revendications ci-devant, **caractérisé en ce que** le brin de sangle (**1.1**) est rappelé de la position de service à la position de repos quand le cycle de mise à disposition pour enclencher la languette de fermeture **(2, 2a)** dans la boucle de fermeture **(4, 4a à 4c, 14, 14a, 18)** est dépassé.

27. Système de retenue selon au moins l'une des revendications ci-devant, **caractérisé en ce qu'**en appuyant sur la touche de déverrouillage général **(84)** de la boucle de fermeture **(9.1),** un câble de déclenchement **(4.2)** ou un moteur électrique **(4.2b)** pour actionner une touche de déverrouillage (**84a, 84b**) de la boucle de fermeture (**4a à 4c**) sont activés, ce qui provoque le déverrouillage de la languette de fermeture et de la boucle de fermeture.

28. Système de retenue selon la revendication 27, **caractérisé en ce qu'**en appuyant sur la touche de déverrouillage général (**84**), la liaison de toutes les languettes de fermeture (**2, 2a, 9, 11, 25)** avec les boucles de fermeture **(4, 4a à 4c, 14, 14a, 18, 18a, 18b, 18.1 à 18.3, 15, 15a, 19, 19a, 19b, 19.1 à 19.3, 7, 8, 8a, 8d, 9.1)** est défaite.

29. Système de retenue selon au moins l'une des revendications 27 et 28, **caractérisé en ce qu'**en appuyant sur la touche de déverrouillage général (**84**), le dispositif d'actionnement du dispositif d'amenée de sangle **(20, 20a** à **20d)** déplace le brin de sangle **(1.1)** de la position de service en position de repos.

30. Système de retenue selon au moins l'une des revendications 1 à 26, **caractérisé en ce qu'**un bouton-poussoir **(84o)** est disposé sur l'assise **(3.1, 3.1a à 3.1d) ;** en appuyant sur ledit bouton-poussoir, est activé un câble de déclenchement **(4.2)** ou un moteur électrique **(4.2b)** destinés à activer une touche de déverrouillage **(84a, 84b)** de la boucle de fermeture **(4a** à **4c) ;** suite à cela, la languette de fermeture sera déverrouillée de la boucle de fermeture.

31. Système de retenue selon la revendication 30, caractérisé en ce la liaison de toutes les languettes de fermeture **(11, 25)** avec les boucles de fermeture **(7, 8, 8a, 8d)** de l'assise est défaite en appuyant sur un bouton-poussoir **(84o).**

32. Système de retenue selon au moins l'une des revendications ci-devant, **caractérisé en ce que** le brin de sangle **(1.1)** est réceptionné par un rétracteur de sangle **(20.7, 20.7a)** avant d'atteindre la position de repos.

33. Système de retenue selon au moins l'une des revendications ci-devant, **caractérisé en ce que** la languette de fermeture **(25)** est munie d'une broche à déclic rapide **(25.1).**
